# EUROPÄISCHE PATENTSCHRIFT

(11) **EP 1 639 809 B1**
(45) Veröffentlichungstag und Bekanntmachung des Hinweises auf die Patenterteilung: **21.04.2010**
(21) Anmeldenummer: 04740215.1
(22) Anmeldetag: 23.06.2004
(51) Int. Cl.: H04N 5/222, F16M 11/18, F16M 11/42

(54) **SCHWENKKOPFSYSTEM INSBESONDERE FÜR FILM- UND VIDEOKAMERAS**
PIVOTING HEAD SYSTEM IN PARTICULAR FOR FILM AND VIDEO CAMERAS
SYSTEME A TETE PIVOTANTE, EN PARTICULIER POUR CAMERA A FILM ET CAMERA VIDEO

(30) Priorität: 02.07.2003 DE 10329747
(43) Veröffentlichungstag der Anmeldung: 29.03.2006
(73) Patentinhaber: Cramer, Sebastian, 81549 München (DE)
(72) Erfinder: Cramer, Sebastian, 81549 München (DE)
(74) Vertreter: Hano, Christian
(86) Internationale Anmeldenummer: PCT/EP2004/006796
(87) Internationale Veröffentlichungsnummer: WO 2005/004465

(56) Entgegenhaltungen:
- CA-A- 2 308 781
- DE-A- 19 723 384
- FR-A- 708 681
- FR-A- 1 444 254
- US-A- 2 613 083
- US-A- 2 666 610
- US-A- 3 603 545
- US-A- 4 789 121

## Beschreibung

### Anwendungsgebiet und Stand der Technik

Die Erfindung betrifft ein Schwenkkopfsystem, insbesondere für Film- oder Videokameras, gemäß dem Oberbegriff des Anspruchs 1.

Bei Film- und Videoaufnahmen wird der Schwenk- und Neigewinkel einer Kamera bekanntermaßen mit einem Schwenkkopf eingestellt, welcher für statische Aufnahmen auf einem Stativ und für Kamerafahrten auf einem Kamerawagen, meist einem Dolly, wie in DE 3236837 C2 oder in WO 99/51911 A1 beschrieben, montiert werden kann.

Diese handelsüblichen Kamerawagen weisen für gewöhnlich vier Laufrollen oder 4 Laufrollenpaare auf, auf denen ein Rahmen ruht, der eine Hubsäule oder eine Hubschere trägt. Auf der Oberseite einer solchen Hub- oder Tragevorrichtung befindet sich für gewöhnlich eine Schnittstelle, welche in der Lage ist, mit einem handelsüblichen Schwenkkopf verbunden zu werden.

Die oben genannten Kamerawagen sind so ausgelegt, dass der Kameramann und sein Assistent mit auf dem Wagen sitzen oder stehen und für gewöhnlich gemeinsam mit der Kamera verfahren werden. Hierfür benötigt der Kameramann in der Regel weitere Mitarbeiter, die den Wagen verschieben, wodurch sich die Koordinierung einer organischen Kamerabewegung teilweise erschwert, da Schwenkbewegung und Verfahren des Dollies von unterschiedlichen Personen ausgeführt werden. In einigen Anwendungen, z.B. bei Makroaufnahmen will man oft nur sehr kleine, präzise Kamerabewegungen ausführen oder die Kamera beispielsweise unmittelbar über eine Oberfläche führen, wobei sich ein derart großer Wagen als Nachteil erweist. Ohne weitere Hilfsmittel liegt die niedrigste erzielbare Optikhöhe bei derartigen Dollies mit anmontiertem Schwenkkopf oft bei einem Meter und mehr über der Aufstandsfläche.

Um eine Kamera bei einer derartigen Aufgabenstellung in die gewünschte Position zu bringen, ist es meist notwendig, zusätzliche Auslegearme zwischen den Kamerawagen und den Schwenkkopf zu montieren.

Bekannt sind ebenfalls Kamerakräne, wie beispielsweise der in DE 3804463 A1 vorgestellte Kamerawagen mit einem doppelarmigen Ausleger, bei denen ein Schwenkkopf auf einen schwenkbar gelagerten Arm auch hängend montiert werden kann und so z.B. auch dicht über einer Oberfläche führbar ist. Diese Systeme bauen jedoch meist noch größer als Kameradollies und werden, wie im oben beschriebenen Fall, häufig sogar auf die Mittelsäule eines Dollies montiert. Somit weisen Kamerakräne auf Grund ihrer üblichen Baugröße ähnliche Schwierigkeiten hinsichtlich Bedienbarkeit und Aufwand auf, wie oben beschrieben.

Ebenfalls bekannt ist, dass Stative, auf denen ein Schwenkkopf montiert ist, mit einer Fahrspinne ausgestattet sein können, wie dies unter anderem in DE 33 41 403 C2 zu erkennen ist. Diese Systeme bestehen für gewöhnlich aus drei eigenständigen Komponenten: Schwenkkopf, Stativ und Fahrspinne. Sie sind zwar leichter gebaut, als ein Dolly, aber meist nur geringfügig kleiner. Für die Bewältigung oben erwähnter kameratechnischer Aufgaben, sind sie generell noch weniger geeignet als Dollies, weil die leichtere Bauweise hierbei zu Lasten der Stabilität und der Verwindungssteifigkeit geht und somit Ausleger nicht befriedigend befestigt werden können.

Bekannt sind auch zum Teil kleinere Systeme, bei denen ein Kameraschwenkkopf auf einem linear verfahrbaren Schlitten oder einer Fahrplatte montiert wird, welche auf unterschiedlich ausgeführten Linearprofilen oder Schienen verfahrbar sind (DE 198 56 701 A1 und DE 198 22 778 C1). Durch die starre Führung auf einer linearen Schiene ist die Bewegungsfreiheit der Kamera oft eingeschränkt. Insbesondere bei manuell geführten Konfigurationen sind Schwenkkopf und Schlitten in der Regel getrennte Komponenten meist unterschiedlicher Hersteller. Durch eine bauliche Trennung dieser beiden Komponenten in zwei Einheiten, welche meist über eine, unten näher erläuterte Schnittstelle verbunden wird, ist es kaum möglich, eine optimale Baugröße zu erzielen und eine gut führbare, kompakte und verfahrbare Schwenkvorrichtung zu erzielen.

Oft wird bei diesen linear geführten Schlitten, die Schwenk- und Neigebewegung einer Kamera, ebenso wie das Verfahren des Schlittens ausschließlich über Motoren gesteuert, wie dies im Fall der zweitgenannten Patentschrift DE 198 22 778 C1 der Fall ist, was eine unmittelbare Eingriffsmöglichkeit für den Kameramann einschränkt.

Als gängige Schnittstellen zwischen einem Schwenkkopf und tragenden Vorrichtungen insbesondere für professionelle Filmkameras haben sich weltweit im wesentlichen zwei Standards etabliert: zum einen eine halbkugelförmige, konvexe Schwenkkopfunterseite mit einem Durchmesser von meist 150mm, welche in einer entsprechenden konkaven, nach oben offenen Schale befestigt wird und zum anderen eine Platte mit verschiedenen Zentrierringen, in welche oft eine Vorrichtung zur Nivellierung der Aufnahmeplatte integriert ist. Allein diese Schnittstellen weisen z.T. eine nicht unerhebliche Baugröße auf und werden in genormten Zapfen, Auslegearmen und Rohren weitergeführt, die ebenfalls nicht dazu beitragen, einen Kameraaufbau klein und flach zu halten.

Die US-A-2 613 083 beschreibt einen Wagen zur Tragen eine Kamerasrativs, wobei nur eine Laufrolle in beliebigen Drehstellungen in der Horizontalen Ebene einstellbar und arretierbar ist.

Die FR-A-1 444 254 beschreibt ein dreibeiniges, klappbares gattungsgemäßes Kamerastativ, wobei an jedem Bein eine Laufrolle vorgesehen ist. An jedem Bein ist eine Feststellschraube vorgesehen, deren Ende in eine Öffnung in der Drehhalterung der entsprechenden Laufrolle eingreifen kann, um eine Drehung der Laufrolle um eine vertikale Achse zu blockieren, wenn sie sich in einer bestimmten Drehstellung befindet. Die Drehstellung aller Laufrollen kann hierdurch so festgestellt werden, dass das Stativ geradlinig verfahren werden kann. Die Voreinstellung von Kurvenfahrten ist nicht möglich

### Aufgabe und Lösung

Der vorliegenden Erfindung liegt daher die Aufgabe zugrunde, mit konstruktiv einfachen Mitteln ein flexibles Schwenkkopfsystem mit geringer Baugröße zu schaffen, dass gezielt entlang vorher bestimmter Kurven verfahrbar ist.

Diese Aufgabe wird gelöst durch einen Schwenkkopf mit den Merkmalen des Anspruchs 1. Bevorzugte und vorteilhafte Ausgestaltungen der Erfindung sind Gegenstand der Ansprüche 2 bis 26.

Die mit der Erfindung erzielten Vorteile bestehen insbesondere darin, dass eine besonders klein und flach bauende Einheit aus Schwenkkopf mit vorher bestimmter Verfahrmöglichkeit geschaffen wird. Dieses System ist weniger ausladend und bewegt erheblich weniger Masse, als dies zum derzeitigen Stand der Technik möglich ist.

Einem Kameramann wird somit die Möglichkeit geboten, die Bewegung der Kamera eigenständig zu steuern und beim Verfahren der Kamera nicht auf die Hilfe von Mitarbeitern oder Ansteuermotoren angewiesen zu sein. Die flache Bauweise der Erfindung, lässt beispielsweise auch Aufnahmen, bei denen eine Kamera in unmittelbarer Nähe über dem Boden gleiten soll, einfacher umsetzen.

Eine Reihe von Kameraanwendungen sind somit schneller, präziser und kostengünstiger durchzuführen und auch die Fertigungs- und Anschaffungskosten eines solchen Kopfes dürften deutlich unter dem liegen, was für die bisher notwendigen, handelsüblichen Komponenten aufgebracht werden musste.

Die Weiterbildung nach Anspruch 9 ermöglicht es, die Laufrollen zu arretieren und somit eine Verfahrmöglichkeit zu blockieren. Hierdurch kann das Schwenkkopfsystem als besonders flach bauender reiner Schwenkkopf für Film- und Videokameras eingesetzt werden.

Durch die Weiterbildung nach Anspruch 10 bis 12 können die Laufrollen eine einstellbare Friktion aufweisen, welche besonders durch die Option auf eine Dämpfung dieser Reibung vorteilhaft für eine ruhige Verfahrbewegung sein kann. Auch die Schwenk- und Neigelagerungen der meisten Kameraschwenkköpfe sind in der Regel mit einer solchen Dämpfung ausgestattet, die dem Kameramann das Ausführen von ruhigen Schwenkbewegungen erleichtert. Dieser in Schwenkbewegungen spürbare Widerstand wird durch die Weiterbildung nach Anspruch 10 und 11 auf die Verfahrbewegung erweitert.

Die Weiterbildung nach Anspruch 6 vereinfacht die Ausrichtung aller Laufrollenachsen in einer horizontalen Ebene auf einen beliebigen Punkt, wodurch Kreisfahrten möglich werden.

Durch die Weiterbildung nach Anspruch 24 wird gewährleistet, dass sich die Laufrollen selbstständig in Fahrtrichtung ausrichten und somit auch steuerbare Lenkbewegungen möglich sind.

Die Weiterbildung nach Anspruch 25 und 26 sieht eine Führungsstange vor, welche einem Kameramann eine Bedienung auch in aufrechter Haltung erlaubt, wenn dass Schwenkkopfsystem z.B. auf dem Boden eingesetzt wird. Zudem kann es die Führung an unzugänglichen Motiven erleichtern.

Die Erfindung ist im Folgenden anhand der Zeichnungen näher erläutert. Es zeigen:
Fig. 1 eine schaubildliche Darstellung eines Schwenkkopfsystems mit drei Laufrollen und einer L-förmigen Kamerahalterung;
Fig. 2 eine schaubildliche Darstellung eines Schwenkkopfsystems mit drei Laufrollen und einer wippenförmigen Kamerahalterung;
Fig. 3 eine schaubildliche Darstellung eines Schwenkkopfsystems mit einem u-förmigen Halterungselement und einer L-förmigen Kamerahalterung;
Fig. 4 eine schaubildliche Darstellung eines Schwenkkopfsystems mit drei Laufrollen und einem abnehmbaren Kameraschwenkkopf;
Fig.5 eine schaubildliche Darstellung des Schwenkkopfsystems aus Fig.4 mit abgenommenen Kameraschwenkkopf;
Fig. 6 eine Draufsicht auf eine Laufrolle und deren Lagerung im Halterungselement mit Skala und Markierungen;
Fig.7 eine Draufsicht auf zwei parallel zu einander angeordnete Laufrollen und deren Lagerung im Halterungselement mit einem Stellrad und einer Digitalanzeige;
Fig. 8 eine schaubildliche Darstellung einer aufsteckbaren Laserpeilvorrichtung;
Fig.9 eine schaubildliche Darstellung einer aufsteckbaren Peilvorrichtung mit Kimme und Korn und einem Verlängerungsrohr;
Fig.10 eine schematische Darstellung einer Kreisfahrt um einen Punkt;
Fig.11 eine schematische Darstellung einer Kreisfahrt um einen Punkt mit drei Stellmotoren, welche über Kabel mit einer CPU verbunden sind;
Fig. 12 eine Schnittdarstellung durch eine Laufrollenlagerung mit einem Lagerungsrohr;
Fig. 13 eine Schnittdarstellung durch eine Laufrollenlagerung mit einem verlängert bauenden Lagerungsrohr;
Fig. 14 eine schaubildliche Darstellung eines Lagerungsrohres mit möglichen Arretiervorrichtungen;
Fig. 15 eine schematische Seitenansicht zweier Kamerawippen samt Führungsrollen;
Fig. 16 eine schaubildliche Darstellung eines Schwenkkopfsystems mit zwei in einer flachen, geraden Führung laufenden Laufrollen;
Fig. 17 eine schaubildliche Darstellung eines Schwenkkopfsystems mit zwei in einer flachen, gebogenen Führung laufenden Laufrollen;
Fig. 18 eine schaubildliche Darstellung eines Schwenkkopfsystems mit zwei in einer höher bauenden Führung laufenden Laufrollen und einer in einem verlängerten Lagerungsrohr gelagerten Laufrolle;
Fig. 19 eine schaubildliche Darstellung eines Schwenkkopfsystems mit drei in einer Doppelschiene laufenden Laufrollen;
Fig. 20 eine schematische Draufsicht auf eine Laufrolle, bei welcher die vertikal verlaufende Achse für die Verdrehung in der Laufrollenachse in der horizontalen Ebene nicht im Zentrum der Laufrolle liegt;
Fig. 21 eine schaubildliche Darstellung einer Laufrollenanordnung, bei der mit Hilfe einer horizontalen Achsenhalterung die Laufrolle außerhalb des Halterungselements liegt;
Fig. 22 eine schematische Darstellung einer Lenkbewegung, die zwei parallel zueinander stehende, in ihrer horizontalen Verdrehung arretierte Laufrollen aufweist und eine in ihrer horizontalen Verdrehung freibewegliche Laufrolle, die sich außerhalb des Halterungselements befindet;
Fig. 23 eine schematische Darstellung einer Lenkbewegung, die eine in Fahrrichtung ausgerichtete und in ihrer horizontalen Verdrehung arretierte Laufrolle aufweist und zwei in ihrer horizontalen Verdrehung freibewegliche Laufrollen, die sich außerhalb des Halterungselements befinden;
Fig. 24 eine schaubildliche Darstellung eines Schwenkkopfsystems mit einer anmontierten Führungsstange;
Fig. 25 eine schaubildliche Explosionszeichnung die eine abgenommene Befestigungssäule samt L-förmiger Kamerahalterung, einen Säulen block, ein Halterungselement mit Laufrollen und horizontalem Lagerring, sowie ein horizontales Schwenkmodul zeigt.

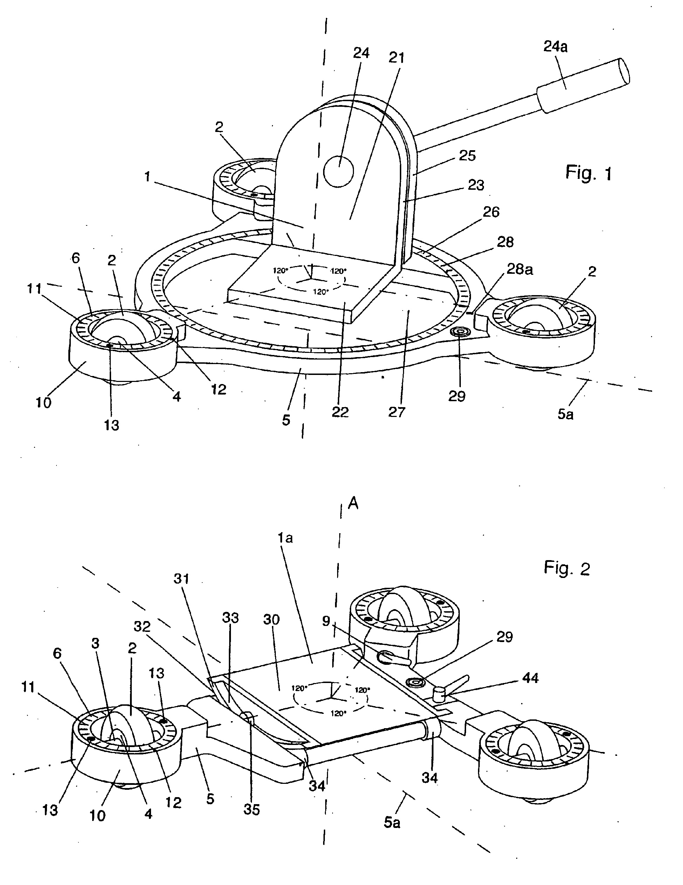

Gemäß Fig. 1, 2, 3 und 4 weisen mögliche Ausführungsformen des erfindungsgemäßen Schwenkkopfsystem eine Schwenkvorrichtung 1, 1 a, 1b, 1 c auf, welche innerhalb oder auf einem im wesentlichen flach bauenden Halterungselement 5 angebracht ist, das auf drei Laufrollen 2 aufliegt, die im einem Winkelabstand um eine gedachte vertikale Achse A angeordnet sind, die durch das Halterungselement 5 verläuft.

Die Laufrollen 2 drehen jeweils um eine horizontale Laufrollenachse 3, welche in einem Lagerelement 6 montiert ist, das sich in einer horizontalen Ebene verdrehen lässt. Zur Erzielung einer flachen Bauweise ist ein solches Lagerelement 6 in einem Lagerringelement 10 verdrehbar gelagert, welches an der Außenseite des Halterungselements 5 angeordnet und einteilig mit diesem ausgebildet ist.

In den dargestellten Beispielen sind alle Laufrollenachsen 2 in einer horizontalen Ebene gegenüber dem flachen Halterungselement 5 verdrehbar, da sich so eine größtmögliche Freiheit in der Gestaltung der Verfahrwege erzielen lässt. Zur Erzielung einer Kurvenfahrt wäre es aber bereits ausreichend, nur eine Laufrolle in ihrer Laufrichtung auszurichten.

Vorgesehen, aber nicht in der Zeichnung sichtbar, ist eine Arretiervorrichtung, mit der die Laufrollen 2 in Umlaufrichtung arretiert werden können. Hierdurch lässt sich ein unbeabsichtigtes Wegrollen des Kamerasystems verhindern. Eine ebenso denkbare Lösung wäre es, ein oder mehrere Bremselemente aus der Unterseite des Halterungselements 5 so herauszufahren, dass diese Kontakt mit der Aufstandsfläche bekommen.

Mit Hilfe einer Bremse 9 kann die horizontale Verdrehung einer Laufrollenachse 3 ebenfalls arretiert werden. Hierbei weisen alle Lagerelemente 6 eine derartige Brems- oder Arretierungsvorrichtung 9 auf, auch wenn Fig. 1, 2, 3 und 4 dies nicht für alle Laufrollen zeigen. Anstelle einer Brems- oder Arretiervorrichtung 9 ist es auch denkbar, die Friktion für die horizontale Verdrehung des Lagerelements 6 gegenüber dem Halterungsrahmen 5 so schwergängig auszulegen, dass ein unabsichtliches Verdrehen der Laufrichtung einer Laufrolle 2 während des Betriebs ausgeschlossen ist. Ebenso ist es denkbar, die Verdrehung des Lagerelements 6 gegenüber dem Halterungselement 5 durch Getriebelösungen, beispielsweise durch ein selbsthemmendes Schneckengetriebe oder durch Stellmotoren zu realisieren. Alle derartigen Lösungen weisen als Merkmal auf, dass die Laufrichtung von zumindest einer Laufrolle sowohl voreinstellbar, als auch fixierbar ist.

Zur Ausrichtung der Laufrollen ist als Laufrichtungseinstellvorrichtung eine Skala 11 und Markierungen 13 vorgesehen, die auf der Oberseite der Lagerelements 6 angebracht sind und den Verdrehwinkel eines Lagerelements 6 gegenüber einem Lagerringelement 10 an einer Referenzmarke 12 auf der Oberseite des Lagerringelements 10 ablesbar machen, wobei die Referenzmarken 12 so angebracht sind, dass eine gedachte Linie zwischen Laufrollenzentrum und Referenzmarke 12 parallel zur Hauptorientierung 5a des Schwenkkopfsystems verläuft.

Die in Fig.1 gezeigte Schwenk- und Neigevorrichtung 1 weist eine L-förmige Halterung 21 auf, auf deren horizontalem Schenkel 22 eine Kamera befestigt werden kann, deren optische Achse parallel zur Seitenwand der L-förmigen Halterung 21 ausgerichtet ist.

Neigebewegungen der Kamera sind durch eine Verdrehung der L-förmigen Halterung 21 um eine horizontale Achse mit Hilfe eines Halterungslagers 24 gegenüber einer senkrecht stehenden Befestigungssäule 25 möglich. Hierzu ist üblicherweise ein Schwenkarm 24a so mit einer zentralen Welle im Halterungslager 24 verbunden, dass eine Kraftübertragung auf die L-förmige Halterung erfolgt.

Eine eingestellte Neigung sollte vorteilhaft und üblicherweise auch arretierbar sein. Die Verdrehung zwischen L-förmiger Halterung 21 und Befestigungssäule 25 kann eine einstellbare Friktion aufweisen, welche vorteilhaft mit einer Dämpfung versehen ist, wie dies bei handelsüblichen Schwenkköpfen mit einer Fluiddämpfung üblich ist.

Schwenkbewegungen einer Kamera werden in der hier dargestellten Ausführung dadurch erreicht, dass ein horizontal liegender Lagerring 26, auf welchem die Befestigungssäule 25 senkrecht stehend fest montiert ist, im Halterungselement 5 verdrehbar gelagert ist. In diesem Fall ist die horizontale Schwenkvorrichtung 1 direkt in dem Halterungselement 5 angebracht, um eine möglichst niedrige Kameraaufstandsfläche zu erzielen.

Auch eine horizontale Schwenkbewegung sollte vorteilhaft arretierbar sein und kann eine einstellbare Friktion aufweisen, welche mit einer Dämpfung versehen sein kann, wie dies bei handelsüblichen Schwenkköpfen mit einer Fluiddämpfung üblich ist.

Bekannt und sinnvoll bei Schwenkköpfen mit einer L-förmigen Kamerahalterung 21 ist auch eine Verstellvorrichtung, mit der sich die Länge des senkrechten Schenkels 23 einer solchen Halterung 21 einstellen und arretieren lässt, wodurch sich die Höhe einer Kameraoptik gegenüber der Aufstandsfläche verändern lässt. Eine andere Möglichkeit zur Veränderung der Optikhöhe besteht, wie ebenfalls bekannt, darin, die Befestigungssäule 25 in ihrer baulichen Höhe verstell- und arretierbar auszulegen, wodurch sich die L-förmige Halterung 21 in eine höhere oder tiefere Position bringen lässt. Diese hinsichtlich ihrer Detailausbildung nicht näher interessierenden Merkmale sind in Fig. 1 auch nicht näher im Detail dargestellt.

Der horizontale Lagerring 26 weist in seinem Innern eine größere Ringöffnung 27 auf, welche ein Durchschwenken oder ein teilweises Durchschwenken der L-förmigen Halterung 21 und/oder der montierten Kamera ermöglicht und somit eine besonders tief liegende Kameraposition erlaubt. Hierbei ist es möglich, eine nur wenige Zentimeter über der Aufstandsfläche des Schwenkkopfsystems liegende Montagefläche für eine Kamera auf dem horizontalen Schenkel 22 der L-förmigen Halterung 21 zu erzielen. Dies dürfte eine um etwa den Faktor zehn flachere Bauform sein, als dies bei handelsüblichen Schwenkköpfen möglich ist, welche sich zudem nicht verfahren lassen. Es ist keine stehende Schwenkanordnung bekannt, welche eine derart niedrige Kameraposition ermöglicht. Eine niedrig liegende Kameraposition ist hierbei nicht nur im Hinblick auf die Bildgestaltung wünschenswert, sondern führt auch zu einem niedrig liegenden Schwerpunkt des gesamten Systems, was sich positiv auf das Fahrverhalten auswirkt.

Eine auf dem horizontalen Lagerring 26 aufgebrachte Schwenkskala 28 zeigt den Verdrehwinkel des Lagerrings 26 zum Halterungselement 5 an einem geeigneten Referenzpunkt 28a an. Eine auf der Oberseite des Halterungselements 5 angebrachte Libelle 29 zeigt an, ob sich die Einheit im Wasser befindet.

Zum linearen Verfahren eines Schwenkkopfsystems lassen sich mit Hilfe der Skalen 11 die Verdrehungswinkel aller Lagerelemente 6 gegenüber dem Halterungselement 5 auf einen einheitlichen Wert einstellen, so dass alle Laufrollen 2 eine parallele Ausrichtung aufweisen, in dessen Richtung das System nun verfahrbar ist. Die Verdrehbarkeit der Lagerelemente 6 kann mit Hilfe einer Bremse 9 arretiert werden, wodurch verhindert wird, dass sich eine voreingestellte Laufrollenausrichtung unabsichtlich verstellt.

Über eine in Fig. 1, 2, 3 und 4 nicht dargestellte, oben bereits erwähnte Arretierung lassen sich die Laufrollen 2 in Umlaufrichtung arretieren, womit ein unbeabsichtigtes Verfahren des Systems verhindert werden kann. Alternativ wurde ein aus dem Halterungselement 5 herausfahrbares, ebenfalls nicht dargestelltes Bremselement bereits erwähnt, welches aus der Unterseite des Halterungselements 5 so verfahren werden kann, dass es Kontakt mit der Aufstandsfläche bekommt und so ein unbeabsichtigtes Wegsrollen verhindert.

Mit Hilfe derart blockierter Laufrollen 2 lässt sich die Einheit als ein besonders flach bauender reiner Schwenkkopf verwenden, mit welchem reine Neige- und Schwenkbewegungen einer Kamera ausgeführt werden können. Für statische Aufnahmen lässt sich natürlich auch die Schwenkmöglichkeit der Kamera arretieren, wobei Aufnahmen dann mit einem voreingestellten Kamerawinkel durchgeführt werden.

Fig. 2 zeigt ein Ausführungsbeispiel eines Schwenkkopfsystems, bei welchem nur der Neigewinkel einer Kamera einstellbar ist und keine horizontale Verschwenkmöglichkeit vorgesehen ist. Auch hier ist die Schwenkvorrichtung 1a zum Erreichen einer besonders niedrigen Kameraposition direkt in das flache Halterungselement 5 eingebaut.
Hinsichtlich der Laufrollenanordnung und der Merkmale ihrer Einstellbarkeit ist dieses Ausführungsbeispiel identisch mit dem vorangegangenen Ausführungsbeispiel in Fig.1.

Eine Kamera lässt sich auf einer Wippe 30 montieren, die auf ihrer Unterseite an den Seiten jeweils eine bogenförmige Führungskufe 31 aufweist, welche mit ihren konvexen Außenseiten 32 auf zwei im Abstand zueinander angeordneten unteren Führungsrollen 34 aufliegen. Eine obere Führungsrolle 35 berührt die konkave Innenseite 33 der Führungskufe 31 und verhindert ein unbeabsichtigten Herausfallen der Wippe 30. Mit Hilfe einer Neigearretierung 44 kann eine vorbestimme Neigungsposition der Kamera arretiert werden.

Auch in diesem Beispiel lässt sich eine sehr geringe Höhe von sechzig bis achtzig mm zwischen Aufstandsfläche des Systems und Montagefläche einer Kamera auf der Oberseite der Wippe 30 erreichen, was einer um ungefähr den Faktor fünf niedrigeren Lösung entspricht, als dies bei handelsüblichen Schwenkköpfen möglich ist, welche zudem keine Verfahrmöglichkeit bieten.

Die besonders flach bauende Anordnung der Schwenk-/Neigevorrichtung 1 bzw. 1 a, des Halterungselements 5 und der Laufrollen 2 wird unter anderem auch dadurch erzielt, dass bewusst auf bekannte Schnittstellen verzichtet wird, welche handelsübliche Schwenkköpfe normalerweise an ihrer Unterseite aufweisen, um mit weiteren Halterungsvorrichtungen verbunden zu werden.

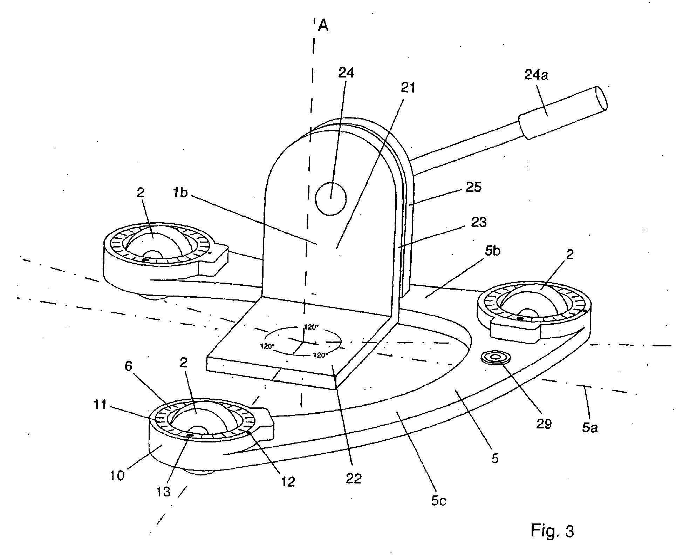

Fig. 3 zeigt ein Schwenkkopfsystem mit einer L-förmigen Schwenkvorrichtung 1b, welche auf einem flachen u-förmigen Halterungselement 5 angebracht ist, an dessen Enden und in dessen Scheitelpunkt in einer horizontalen Ebene jeweils eine Laufrolle 2 in einem Lagerelement 6 gelagert ist. Eine solches System ist, wie das Ausführungsbeispiel in Fig.2, ebenfalls nur zur Durchführung von vertikalen Neigebewegungen einer Kamera geeignet und erlaubt keine horizontalen Schwenks.

Der von oben betrachtet rechte Schenkel des Halterungselements 5 ist hierbei der Montageschenkel 5b auf welchem eine Befestigungssäule 25 mitsamt einer L-förmigen Halterung 21 angebracht ist, wobei der linke Schenkel des Halterungselementes 5 der Stützschenkel 5c ist, welcher einen nahezu kreisförmigen Bogenverlauf aufweist, um auf der Innenseite eine größtmögliche Bewegungsfreiheit für Schwenkbewegungen der L-förmigen Halterung 21 und einer montierten Kamera zu gewährleisten.

Hinsichtlich der Laufrollenanordnung und der Merkmale ihrer Einstellbarkeit ist dieses Ausführungsbeispiel identisch mit den vorangegangenen beiden Ausgestaltungen in Fig.1 und Fig.2.

Wie in Fig. 1 ist auch hier die Neigevorrichtung der L-förmigen Halterung 21 vorteilhaft mit einer Arretierung und einer Dämpfung versehen, welche allerdings ebenfalls nicht näher dargestellt ist. Ebenso weist diese Ausführung einen Schwenkarm 24a auf, mit dem eine Krafteinleitung auf die L-förmige Halterung 21 übertragen werden kann.

Eine solche Anordnung ermöglicht es einem Kameramann mit einer ebenso niedrigen Kamerahöhe, wie im Ausführungsbeispiel der Fig. 1 zu arbeiten und über eine Längenverstellung des senkrechten Schenkels 23 oder der Befestigungssäule 25 die Höhe einer Kameraoptik in einer frei zu wählenden Höhe einzustellen. Durch die offene Bauform des u-förmigen Halterungselements 5 ist es möglich, extrem nah an ein aufzunehmendes Objekt heranzufahren, gegebenenfalls sogar teilweise über dieses fahren und mit einer entsprechend starken Neigung der Kamera auf das Objekt herabzublicken.

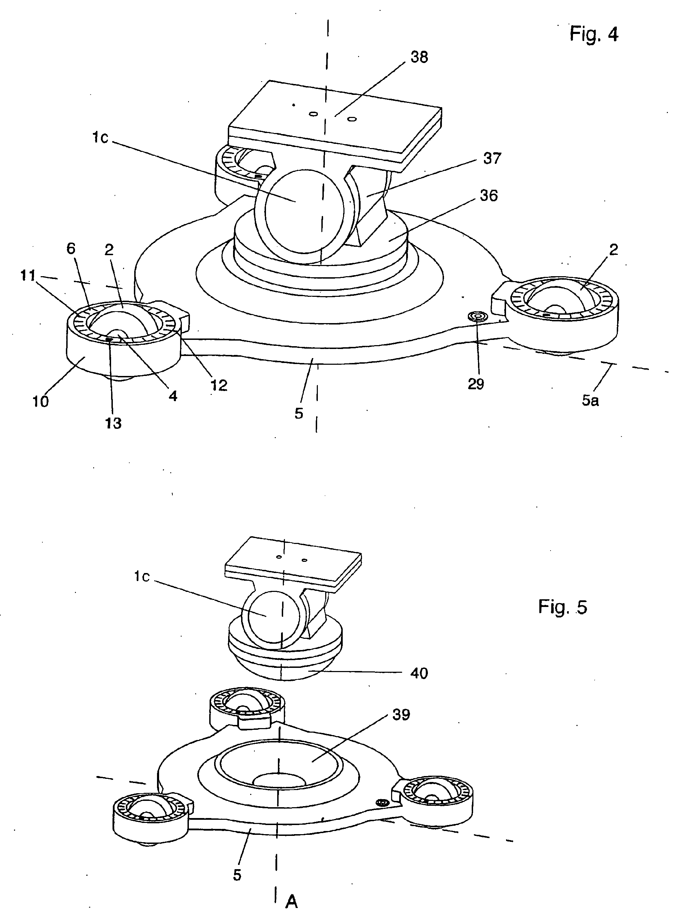

Fig. 4 und Fig.5 zeigen ein Schwenkkopfsystem mit einer abnehmbaren Schwenkvorrichtung 1c in montiertem und abgenommenen Zustand. Ein solches System weist eine Laufrollenanordnung wie Fig. 1, 2 und 3 auf, mit den dort beschriebenen Merkmalen.

Die hier dargestellte Schwenkvorrichtung 1 c besteht aus einem Schwenkmodul für horizontale Schwenkbewegungen 36 auf welchem ein Schwenkmodul für vertikale Schwenkbewegungen 37 fest montiert ist, auf dessen Oberseite sich eine Montageplatte für Kameras 38 befindet. Ein derartiger Aufbau ist beispielsweise in US 005389972A beschrieben und ist die häufigste Anordnung für Schwenkköpfe weltweit. Für einen Anwender kann es deshalb zu einer deutlichen Kostenersparnis führen, wenn er mit einem bereits vorhandenen Kameraschwenkkopf 1 c ein Schwenkkopfsystem wie in Fig.3 dargestellt zusammenfügen kann.

Derartige handelsübliche Kameraschwenkköpfe 1c weisen für gewöhnlich auf ihrer Unterseite eine Schnittstelle auf, die eine Verbindung mit weiteren Kamerasupportsystemen ermöglicht. Im dargestellten Ausführungsbeispiel ist diese Schnittstelle eine konvexe Schwenkkopfunterseite 40, welche in eine konkave Aufnahmeschale 39 eingreift, die zur Erlangung einer besonders niedrigen Kamerahöhe bereits in das flache Halterungselement 5 integriert ist.

Somit ruht die Schwenkvorrichtung des handelsüblichen Kameraschwenkkopfes 1c in montiertem Zustand unmittelbar auf dem flachen Halterungselement 5 und stellt eine Lösung dar, welche gegenüber bisher bekannten Lösungen, die aus einem Verfahrwagen, der meist mit einer zusätzlichen Hubvorrichtung ausgestattet ist, sowie einer separaten Schnittstelle zur Schwenkkopfaufnahme und einem Kameraschwenkkopf bestehen, erheblich flacher bauend und deutlich weniger ausladend ist. Der Vorteil einer derartigen Anordnung liegt in einer möglichen Kostenersparnis, da der Anwender gegebenenfalls auf eine bereits bestehende Komponente zurückgreifen kann, auch wenn sich in dieser Konfiguration nicht derart niedrig liegende Aufstandsflächen für eine Kamera realisieren lassen, wie das in Fig. 1, 2 und 3 möglich ist.

Neben der hier dargestellten kugelförmigen Schnittstelle 39, 40 zwischen Kameraschwenkkopf 1 c und flachem Halterungselement 5 ist beispielsweise auch eine flach ausgeführte Schnittstelle denkbar, insbesondere eine, welche zusätzliche Zentrierringe aufweist, welche formschlüssig ineinander greifen. Eine weit verbreitete Ausführung einer solchen Schnittstelle ist das so genannte Mitchell-Mount, welches weltweit ebenfalls zahlreiche Kameraschwenkköpfe an ihrer Unterseite aufweisen.

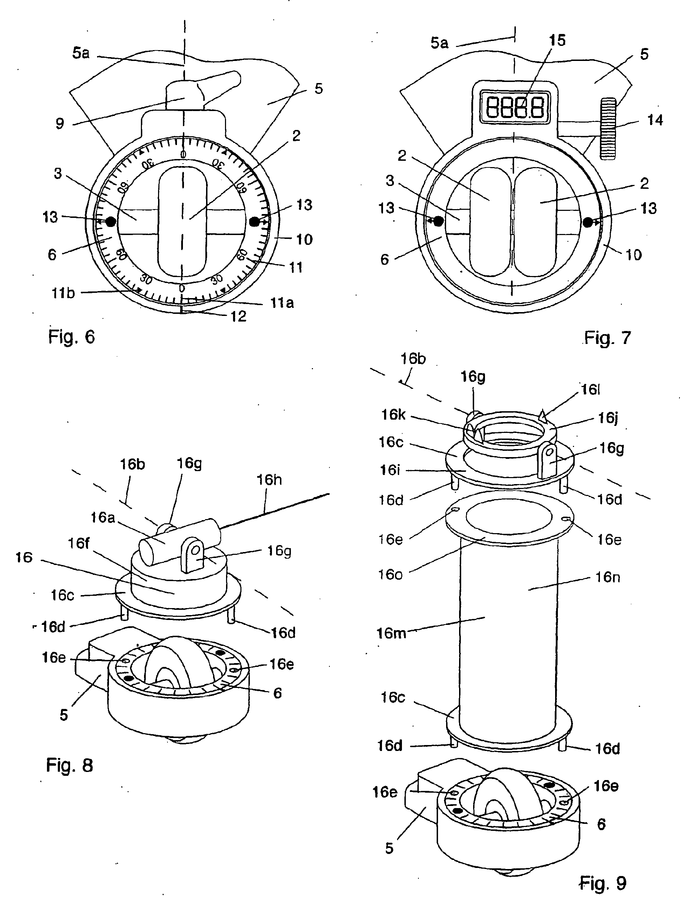

In Fig. 6 wird eine Aufsicht auf eine Laufrolle 2 mit ihrer Laufrollenachse 3 und ein Lagerelement 6 gezeigt, welches im einem Lagerringelement 10 gelagert ist, das einteilig mit dem Halterungselement 5 ausgebildet ist. Auf seiner Oberseite weist das Lagerelement 6 eine Laufrichtungseinstellvorrichtung in der Form einer Skala 11 mit einer Winkeleinteilung auf, welche Markierungsstriche und Zahlen zeigt, die kreisförmig angeordnet sind. Eine Bremse 9 kann das Lagerelement 6 gegenüber dem Halterungselement 5 klemmen und eine Verdrehung der Laufrollenachse 3 arretieren.

Eine besondere Markierung 11 a zeigt gegenüber einer Referenzmarke 12 an, dass die Verdrehung der Laufrollenachse 3 im Lagerelement 6 so ausgerichtet ist, dass die Laufrichtung der Laufrolle 2 parallel zur Hauptachse 5a des Schwenkkopfsystems verläuft.

Weitere besondere Markierungen 11 b sind im Winkel von (30+x*60)° auf der Skala 11 angebracht, wobei x eine ganze Zahl zwischen 0 und 5 ist. Diese Markierungen 11 b weisen, in der dargestellten Ausgestaltung, die Form eines gleichschenkligen Dreiecks auf und erleichtern eine Ausrichtung der Laufrollen eines Schwenkkopfsystems mit drei in einem Winkelabstand von jeweils 120° angeordneten Laufrollen 2, diese so auszurichten, dass jeweils zwei Laufrollen 2 auf einem identischen Verfahrweg liegen und die dritte Laufrolle 2 parallel zu diesem Verfahrweg ausgerichtet ist, was für eine Verwendung des im folgenden vorgestellten Führungsprofilsystems hilfreich ist.

Des weiteren zeigt eine Skala 11 zwei Markierungs- und Peilelemente 13 welche senkrecht über der Laufrollenachse 3 aufgebracht sind und im dargestellten Fall die Form von zwei, auf dem Lagerelement 6 gegenüberliegenden Punkten, aufweisen. Mit Hilfe dieser Markierungs- und Peilelemente 13 ist es möglich, das Lagerelement 6 so zu verdrehen, dass die Laufrollenachse 3 in ihrer horizontalen Ausrichtung auf einen frei wählbaren Punkt im Raum weist. Hierfür wird der angepeilte Punkt und die beiden Markierungs- und Peilelemente 13 in Deckung gebracht. Eine so gefundene Position lässt sich mit Hilfe der Bremse 9 arretieren.

Selbstverständlich ist es ebenso gut möglich, eine Skala 11 auf dem Lagerringelement 10 anzubringen und das Lagerelement 6 mit einer geeigneten Referenzmarke zu versehen, an dem ein Ablesen der Drehstellung der Laufrollenachse 3 möglich ist.

Fig. 7 zeigt eine alternative Ausgestaltung einer Laufrollenanordnung und einer Laufrichtungseinstellvorrichtung auf. Im hier darstellten Ausführungsbeispiel sind zwei Laufrollen 2 dicht im Abstand parallel zu einander angeordnet, wobei beide um die Laufrollenachse 3 drehbar gelagert sind. Eine solche Anordnung, in der zwei oder mehrere Laufrollen 2 parallel zueinander angeordnet sind, stellt insofern einen Vorteil dar, als hierdurch die Aufstandsfläche vergrößert wird und somit eine bessere Spurgenauigkeit erreicht wird. Ebenso werden Unebenheiten in der Aufstandsfläche durch mehrere Laufrollen besser ausgeglichen. Vorteilhaft ist hierbei, wenn alle Laufrollen 2 einzeln um die Laufrollenachse 3 verdrehbar gelagert sind, da sich bei einer Kurvenfahrt für beide Laufrollen 2 unterschiedliche Kreisbögen ergeben und somit jede Laufrolle auf ihrem Kreisbogen fahren kann, was zu einer verbesserten Traktion führt. Dies ist auch der Grund, warum zwei oder mehrere parallel angeordnete Laufrollen 2 einer breiteren Aufstandsfläche einer einzigen Laufrolle 2 vorzuziehen sind.

Die hier beschriebene paarweise Anordnung zweier Laufrollen 2 ist natürlich nicht nur im Zusammenhang mit der im Folgenden vorgestellten Laufrichtungseinstellungsvorrichtung in Form einer Digitalanzeige sinnvoll, sondern kann für jedes Ausführungsbeispiel zur Verbesserung der Spurgenauigkeit hilfreich sein.

In Ausführungsbeispiel von Fig. 7 ist auch eine alternative Laufrichtungseinstellvorrichtung darstellt, bei der eine Digitalanzeige 15 die Verdrehstellung eines Lagerelements 6 gegenüber einem Lagerringelement 10 anzeigt. Eine vorteilhafte Ausgestaltung ist hierbei eine Anzeige in Winkelgrad, wobei die Nullstellung der Digitalanzeige 15 so justiert ist, dass eine Laufrollenachse 3 horizontal um 90° verdreht zur Hauptorientierung 5a des Schwenkkopfsystems ausgerichtet ist. Vorteilhaft wird die Drehstellung eines Lagerelements 6 gegenüber einem Lagerringelement 10 hierbei mittels eines nicht dargestellten Inkrementalgebers, vorzugsweise eines Absolutinkrementalgebers ermittelt, was den Vorteil hat, dass eine Nullstellung des Lagerelements 6 nicht mehr kalibriert werden muss.

Mit Hilfe eines Stellrades 14 kann die Verdrehung des Lagerelements 6 in einer horizontalen Ebene gegenüber einem Lagerringelement 10 eingestellt werden, wobei eine Drehbewegung des Stellrads 14 über eine Getriebeuntersetzung auf das Lagerelement 6 übertragen wird. Denkbar ist beispielsweise, dass die Achse des Stellrads 14 mit einem Schneckengewinde versehen ist, welches in eine Verzahnung des Lagerelements 6 eingreift. Durch eine derartige selbsthemmende Getriebelösung kann auch auf eine Bremse verzichtet werden, da ein unbeabsichtigtes Verdrehen der Laufrollenachsen 3 während des Betriebs ausgeschlossen ist. Vorteilhaft wäre hierbei eine Ausgestaltung, in der ein solcher Eingriff eines Getriebes in ein Lagerelement 6 zurück verfahrbar ist, so dass ein grobes horizontales Verdrehen des Lagerelements 6 mit der Hand möglich ist, und das Stellrad 14 nur zur Feinjustage dient.

Auch hier weist ein Lagerelement 6 besondere Achsmarkierungen 13 auf, welche zur horizontalen Ausrichtung einer Laufrollenachse 3 auf einen frei wählbaren Punkt im Raum dienen. Als weitere Ausführungsformen für derartige Achsmarkierungen 13 sind beispielsweise auch Linien, herausstehende Pins, eine Kimme und Korn, ein Laserelement, ein Zielfernrohr, eine Nut oder ein Ring, ein Fadenkreuz, eine mit einen Strich versehen transparente Scheibe, eine senkrecht stehende Markierungsstange oder ähnliches vorstellbar. Vorteilhaft sind derartige Peilelemente aufsteckbar ausgeführt.

Eine solche Konfiguration wird in Fig. 8 gezeigt, in der eine Peilvorrichtung 16 mit einem um eine horizontale Achse 16b schwenkbaren Laserelement 16a versehen ist, welches auf ein Lagerelement 6 aufsteckbar ist. Eine solche Peilvorrichtung 16 weist auf der Unterseite ihres horizontalen Aufstandsrings 16c zwei Führungspins 16d auf, die in geeignet ausgelegte Führungsbohrungen 16e eines Lagerelements 6 eingreifen können und somit ein positioniergenaues Aufstecken ermöglichen. Statt der hier gezeigten Führungspins 16d, sind natürlich auch andere formschlüssige Verbindungen zwischen Peilelement 16 und Lagerelement 6 denkbar.

Ein im wesentlichen senkrecht stehender, auf seiner Unterseite offener Halterungstopf 16f ist fest mit dem Aufstandsring 16c verbunden. Durch die auf der Unterseite offene Bauform kann eine solche Peilvorrichtung 16 den oberen Bereich einer Laufrolle 2 aufnehmen. Auf der Oberseite des Halterungstopfes 16f sind zwei sich gegenüberliegende Lagerungsbacken 16g angebracht, durch die eine horizontal liegenden Achse 16b verläuft, welche so ausgerichtet ist, dass sie um 90° zur Laufrollenachse 3 verdreht ist. Ein zwischen den Lagerungsbacken 16g befindliches Laserelement 16a ist auf dieser Achse 16b drehbar gelagert, wobei der Laserstrahl 16h senkrecht über dem Zentrum der Laufrollenachse 3 verläuft. Das Lagerelement 6 lässt sich so verdrehen, dass der Laserstrahl 16h jeden beliebigen Punkt im Raum trifft, wodurch gewährleistet ist, das die Ausrichtung einer Laufrollenachse 3 in ihrer horizontalen Verdrehung auf eben diesen Punkt weist.

In Fig.9 wird ein alternatives Ausführungsbeispiel einer aufsteckbaren Peilvorrichtung 16i gezeigt, bei dem ein zwischen den Lagerungsbacken 16g befindlicher Peilring 16j um eine horizontale Achse 16b drehbar gelagert ist, welche um 90° zur Laufrollenachse 3 verdreht ist. Auf der Oberseite des Peilrings 13j sind gegenüberliegend eine Kimme 13g und ein Korn 13h derart angebracht, dass sie beide senkrecht über dem Zentrum der Laufrollenachse 3 liegen. Das Lagerelement 6 lässt sich horizontal verdrehen und der Peilring 16j ist, wie bereits beschrieben, um die Achse 16b neigbar, so dass Kimme und Korn mit einem beliebigen Punkt im Raum in Flucht gebracht werden können. Hierdurch ist gewährleistet, dass eine Laufrollenachse 3 in ihrer horizontalen Verdrehung ebenfalls auf den angepeilten Punkt weist.

Auf der Unterseite eines horizontalen Aufstandsrings 16c können zwei Führungspins 16d in zwei Führungsbohrungen 16e eines Lagerelements 6 oder eines Verlängerungsrohres 16m eingreifen und gewährleisten, wie in Fig.8, ein positioniergenaues Aufstecken.

Mittels eines Verlängerungsrohres 16m ist es auch dann möglich eine Laufrollenachse auf einen beliebigen Punkt im Raum auszurichten, wenn sich eine montierte Kamera zwischen Lagerelement 6 und einem anzupeilenden Punkt befindet. Hierbei wird das Verlängerungsrohr 16m zwischen Peilvorrichtung 16i und Lagerelement 6 eingesteckt, so dass das Peilvorrichtung 16i gewissermaßen über die montierte Kamera "schaut". Ein derartiges Verlängerungsrohr 16m weist auf seiner Unterseite einen Aufstandsring 16c auf, welcher auf seiner Unterseite ebenfalls mit nach unten weisenden Führungspins versehen ist, die formschlüssig in Führungsbohrungen 16e eines Lagerelements 6 eingreifen. Der Aufstandsring 16c ist fest mit einem sich vertikal erstreckenden Rohrkörper 16n verbunden, welcher an seiner Oberseite wiederum fest mit einem weiteren oberen Aufstandsring 16o verbunden ist, der zwei Führungsbohrungen 16e aufweist, die denen im Lagerring 6 entsprechen.

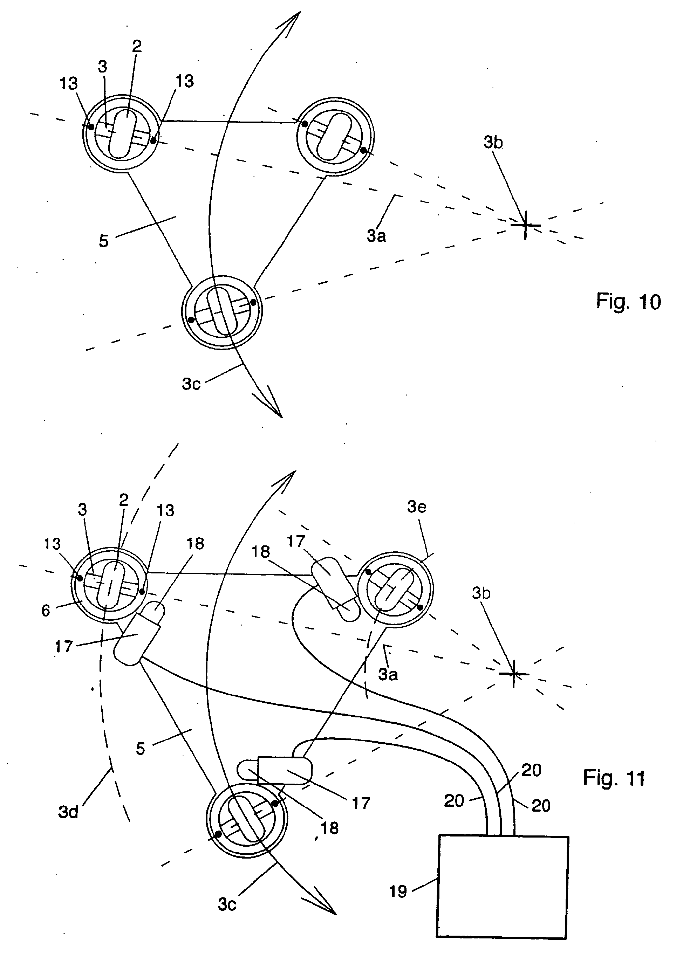

Fig. 10 zeigt eine schematische Darstellung einer kreisförmigen Fahrt eines Schwenkkopfsystems um einen Punkt 3b im Raum. Hierbei sind alle Laufrollenachsen 3 so ausgerichtet, dass sich ihre gedachten Verlängerungen 3a in einem Punkt 3b schneiden. Die senkrecht über den Laufrollenachsen 3 liegenden Markierungs- und Peilelemente 13 befinden sich mit diesem Punkt 3b im Raum ebenfalls in Deckung und können, wie oben beschrieben, zur Ausrichtung der Laufrollenachsen 3 verwendet werden. Beim Verschieben des gesamten Einheit vollführt diese eine kreisförmige Verfahrbewegung 3c um den Punkt 3b.

Die Möglichkeit, mit einer Kamera eine Kreisfahrt um einen beliebigen Punkt ausführen zu können, stellt einen wesentlichen Fortschritt zum derzeitigen Stand der Technik dar. Mit bekannten Kamerawagen, wie beispielsweise dem bereits erwähnten, in WO 99751911 A1 vorgeschlagenen Dolly, ist es derzeit nur möglich, eine Kurvenfahrt um eine Punkt durchzuführen, welcher entweder auf einer Linie liegt, welche durch das Zentrum der beiden Vorderräder verläuft oder auf einer hierzu parallelen Linie durch den Mittelpunkt des Dollies (Fig.47a und Fig 47b). Zudem weist ein derartiger Dolly die bereits eingehend erläuterten Nachteile hinsichtlich der möglichen Aufstandshöhe einer Kamera und Baugröße auf.

Eine weitere sinnvolle Ausrichtung der Laufrollen erreicht man, wenn die Laufrichtungen aller Laufrollen 2 in das Zentrum des flachen Halterungselements 5 weisen, da in dieser Stellung eine Verfahrmöglichkeit blockiert ist. In diesem Fall kann das Schwenkkopfsystem ohne zusätzliche Bremsvorrichtungen als reiner flach bauender Kameraschwenkkopf verwendet werden.

Fig.11 zeigt ebenfalls eine Kreisfahrt um einen beliebigen Punkt 3b im Raum. Allerdings wird hier eine weitere Laufrichtungseinstellvorrichtung in Form von Stellmotoren 17 dargestellt, welche über ein Getriebe 18 mit einem Lagerelement 6 in Eingriff stehen und so die Drehstellung einer Laufrollenachse 3 steuern. Über Verbindungskabel 20 sind die Stellmotoren 17 mit einer CPU 19 verbunden, welche die Steuerbefehle für die Motoren 17 erzeugt. Eine derartige CPU 19 könnte beispielsweise ein Laptop oder ein PDA sein, welcher zusätzlich optional mit nicht näher dargestellten Input Devices wie Joysticks, Kurbeln, Trackerballs oder Computermaus zur Steuerung der Stellmotoren verbunden sein kann. Vorteilhaft ist auch eine Datenübertragung zwischen CPU 19 und allen vorhandenen Stellmotoren 17 drahtlos vorstellbar.

Hierbei ist die Steuerung mit Hilfe einer CPU 19 zur Ausrichtung der Laufrollenachsen 3 natürlich nicht nur auf Kreisfahrten beschränkt, sondern kann ebenso bei linearen Fahrten jeglicher Richtung und sonstigen Kurvenfahrten Anwendung finden. Dabei ist es von Vorteil, wenn die CPU 19 dafür Sorge trägt, dass alle Laufrollen 2 jeweils entweder parallel zueinander ausgerichtet sind, oder so, dass sich die Verlängerungen aller Laufrollenachsen 3 in einem Punkt schneiden.

Eine weitere vorteilhafte Weiterbildung dieses Aufführungsbeispiels lässt sich erreichen, wenn nicht nur die Drehstellung der Lagerelemente 6 gegenüber dem Halterungselement 5 mittels Motoren 17 gesteuert werden, sondern wenn auch die Drehung der Laufrollen 2 um ihre Laufrollenachsen 3 durch weitere, hier nicht dargestellte, Motoren angetrieben werden, welche ebenfalls durch die CPU 19 angesteuert werden. Vorteilhaft ist hierbei, wenn die Geschwindigkeit jeder Laufrolle 2, auf das entsprechende Bogenmaß der jeweiligen Kreisbahnen 3c, 3d und 3e abgestimmt ist, da hierdurch eine optimale Traktion erreicht wird.

Selbstverständlich wäre es in einem derart weit gehend motorisierten Anwendungsfall auch wünschenswert, die Schwenk- und Neigebewegungen einer Kamera an einer Schwenkvorrichtung über entsprechende Motoren und die CPU 19 anzusteuern.

Fig. 10 zeigt einen Schnitt durch eine Lageranordnung mit einer Laufrolle 2, welche drehbar um eine Laufrollenachse 3 gelagert ist, die in einem Lagerelement 6 montiert ist, welches um eine vertikale Achse verdrehbar in einem vorteilhaften, zusätzlichen Lagerungsrohr 7 gelagert ist. Die hier dargestellte Ausführung einer Gleitlagerung zwischen Lagerelement 6 und Lagerungsrohr 7 stellt eine besonders einfache und kostengünstige Bauform dar und kann auch anders ausgeführt sein. Im dargestellten Fall besteht das Lagerelement 6 aus zwei, miteinander zu verbindenden Bauteilen 6a und 6b, die eine Führung auf der Innenseite des Lagerungsrohres 7 umschließt und auf dessen Oberseite sich eine Skala 11 befindet.

Das Lagerungsrohr 7 weist auf seiner Außenseite ein Außengewinde auf, welches in ein passend ausgelegtes Innengewinde des Halterungselements 5 eingreift. An der Unterseite des Lagerungsrohres 7 befindet sich ein Einstellring 7c, welcher eine griffige Oberfläche aufweist, die z.B. gerändelt oder geriffelt ausgeführt sein kann oder auch Vertiefungen oder Erhebungen aufweisen kann und ein manuelles Verdrehen des Lagerungsrohres 7 im Halterungselement erleichtert.

Mittels des zwischen Lagerungsrohr 7 und Halterungselement 5 befindlichen Gewindes ist es möglich, ein Lagerelement 6 mitsamt Lagerungsrohr 7 vom Halterungsrahmen 5 zu lösen. Eine solche lösbare Verbindung stellt einen erheblichen Vorteil dar, insbesondere dadurch, dass sich unterschiedliche Laufrollen in einem Schwenkkopfsystem verwenden lassen, welche im Weiteren noch ausführlich vorgestellt werden. Auch wenn auf eine Nivelliermöglichkeit eines Schwenkkopfsystems verzichtet werden soll, ist es daher vorteilhaft, wenn zumindest eine Laufrolle 2 mitsamt ihrer Lagerung lösbar mit dem Halterungsrahmen 5 verbunden ist. Eine weitere denkbare Verbindung hierbei ist beispielsweise eine Bayonettverriegelung.

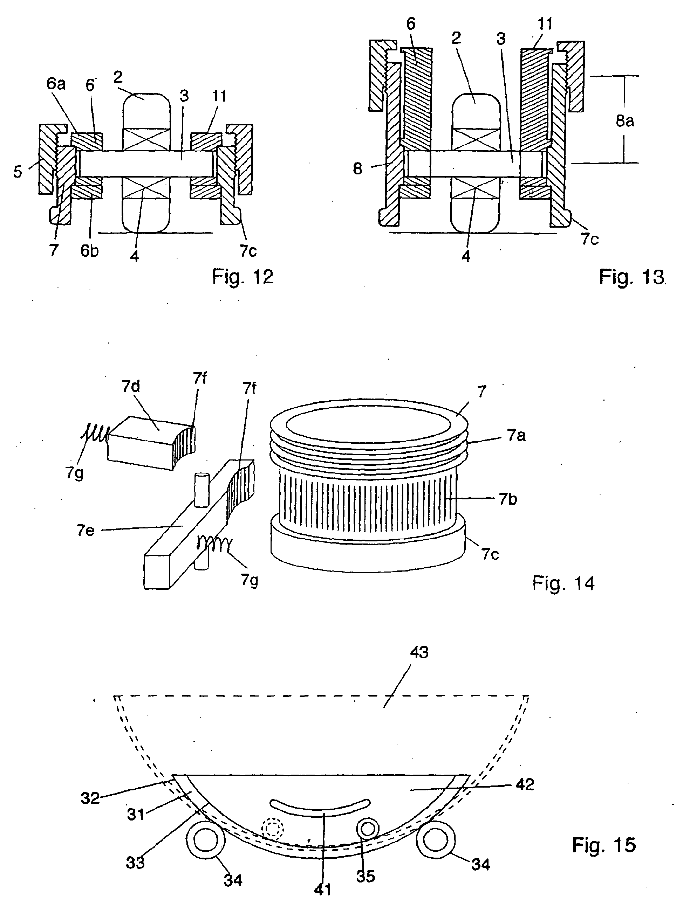

Fig. 13 zeigt eine prinzipiell identisch aufgebaute Lageranordnung, wobei diese jedoch ein deutlich verlängertes Lagerungsrohr 7 aufweist und auch das Lagerelement 6 entsprechend länger ausgeführt ist, so dass auch hier eine Skala 11 den Verdrehungswinkel zwischen Lagerring 6 und Halterungselement 5 anzeigt. Die längere Bauform ist gekennzeichnet durch einen veränderten Abstand 8a zwischen dem mit einem Gewinde versehenen Bereich und der vertikalen Position der Lauf rollenachse 3.

In der schaubildlichen Darstellung Fig. 14 sind ein Lagerungsrohr 7 und mögliche Arretiervorrichtungen dargestellt, mit denen eine Verdrehung des Lagerungsrohres 7 im Halterungselement 5 blockiert werden kann. Neben dem bereits erläuterten Außengewinde 7a und einem an dessen Außenseite griffig ausgeführten Einstellring 7c, kann ein solches Lagerungsrohr 7 eine ringförmige, beispielsweise senkrechte Rastverzahnung 7b aufweisen, in welche die entsprechend ausgelegte Verzahnung gleichen Moduls eines Sperrbolzens 7d oder einer Sperrwippe 7e eingreift, welche mittels Federdruck 7g gegen das Lagerungsrohr 7 gedrückt werden. Durch Zurückfahren des Sperrbolzens 7d oder ein gegen den Federdruck gerichtetes Verdrehen der Sperrwippe 7e wird die Verdrehbarkeit des Lagerungsrohres 7 entriegelt.

In Fig. 15 wird schematisch die Seitenansicht zweier Kamerawippen 42, 43 gezeigt, wie diese bei einem Schwenkkopfsystem in Fig. 2 verwendet werden und bereits vorgestellt wurden. Auf der Oberseite einer solchen Wippe 42, 43 lässt sich eine Kamera montieren, deren optische Achse parallel zu den Seitenwänden ausgerichtet ist. Die Seitenwand einer solchen Wippe 42, 43 weist auf ihrer Unterseite eine bogenförmig gekrümmte Führungskufe 31 auf, deren konvexe Außenseite 32 auf zwei unteren Führungsrollen 34 aufliegt, welche im Halterungselement 5 gelagert sind. Eine obere Führungsrolle 35 liegt an der konkaven Innenseite 33 der Führungskufe 31 an und verhindert ein unabsichtliches Herausfallen der Wippe 42, 43 aus dem System.

Eine bogenförmige, parallel zur Führungskufe 31 verlaufende Nut 41 ist in die Seitenwand geschnitten und derart an den Seiten begrenzt, dass ein (nicht gezeigter) federnd im Halterungselement 5 gelagerter Verriegelungsbolzen in die Nut 41 eingreift und den Schwenkbereich der Wippe seitlich so begrenzt, dass diese nicht aus dem durch die Führungsrollen 34 und 35 geführten Bereich gleiten kann. Zum Wechseln lässt sich ein solcher Verriegelungsbolzen zurückfahren, so dass er nicht mehr in die Nut 41 eingreift.

Es lassen sich in dieser Anordnung Wippen 42, 43, welche niedriger bauend ausgeführt werden und einen kleineren Neigebereich aufweisen 42 und höher bauende Wippen 43, mit einem größeren Neigebereich einsetzen. Eine solche Wechselmöglichkeit bietet einem Kameramann die Möglichkeit, auch Einfluss auf die Höhe einer Kamera und ihrer Optik zu nehmen und diese bei Bedarf gegeneinander auszuwechseln. Dabei ist die Breite einer Führungskufe 31 zwischen Innen- 33 und Außenradius 32 immer so ausgelegt, dass obere 35 und untere Führungsrollen 34 die Kufe 31 berühren und somit ein Austauschen der Wippen 42, 43 ohne eine Nachjustage der Führungsrollen 34, 35 möglich ist.

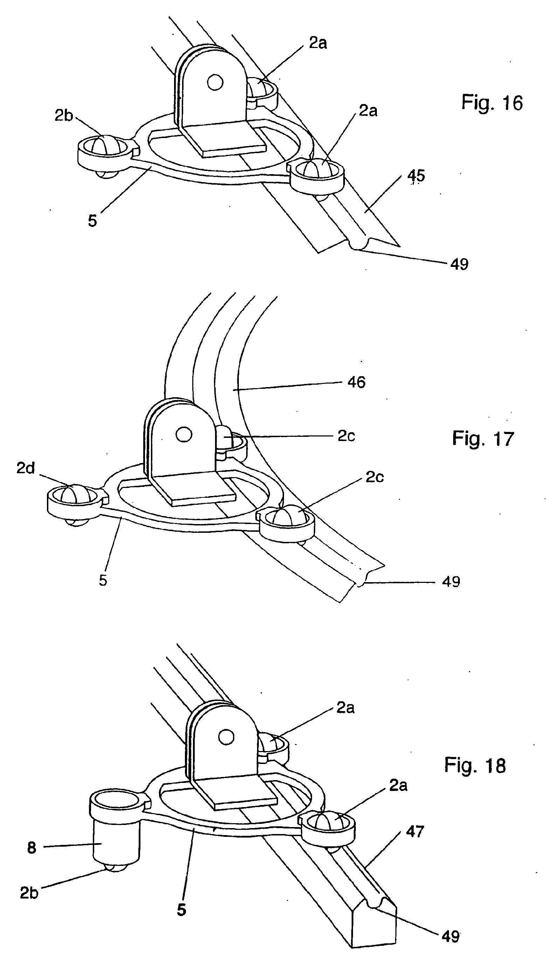

Die Fig. 16 bis Fig. 19 zeigen verschiedene Ausgestaltungen von Führungsprofilen 45, 46, 47 und 48, in welchem ein erfindungsgemäßes Schwenkkopfsystem geführt werden kann. Solche Führungsprofile 45, 46, 47 und 48 bieten den Vorteil, immer auf einer genau definierten Bahn fahren zu können, da nicht auszuschließen ist, dass durch häufiges Hin- und Herfahren eines ungeführten Schwenkkopfsystems die exakte Fahrbahn sich geringfügig verändern kann. Sollte daher ein Kameramann auf einer wiederholgenauen Fahrbahn bestehen, so wird eine Anordnung mit einer 45, 46, 47 oder zwei parallelen Führungsprofilen 48 vorteilhaft sein.

In Fig. 16 werden zwei, zueinander ausgerichtete Laufrollen 2a in einem flachen, mit einer u-förmigen Führungsnut 49 versehenen Schienenprofil 45 geführt, wobei eine dritte Laufrolle 2b parallel zu den beiden anderen ausgerichtet ist und ungeführt auf der Auflagefläche läuft. Wie in den Ausführungen zu Fig. 6 beschrieben, lassen sich die Verdrehpositionen des Lagerelements 6 für eine Schienennutzung durch besondere Markierungen 11 b auf einer Skala 11 und/oder durch spürbares Einrasten beim Verdrehen leicht auffinden.

Das Schienenprofil 45, 46 ist so ausgelegt, das es insbesondere im Scheitelpunkt der u-förmigen Führungsnut 49 gegenüber der Aufstandsfläche sehr flach baut und so nur zu einer minimalen Verkippung des Halterungselements 5 führt, welches über die in Fig. 12 näher erläuterten Lagerungsrohre 7 wieder ins Wasser gebracht werden kann, indem das Lagerungsrohr 7 der frei auf dem Untergrund laufenden Laufrolle 2 so im Gewinde verdreht wird, dass sich der Abstand zwischen Halterungselement 5 und Auflagefläche geringfügig vergrößert.

Insbesondere bei unzugänglichen oder engen Filmmotiven oder in der Makrofotografie kann es vorteilhaft sein, Platz sparend nur ein Schienenprofil 45, 46, 47 verwenden zu können, da ein Kameramann immer bemüht sein wird, einen Aufbau eher klein und übersichtlich zu halten. Dennoch lassen sich natürlich auch zwei parallel zueinander verlaufende Schienenprofile 45 vorstellen, die durch (nicht gezeigte) Abstandshalter in einem geeigneten Abstand zueinander gehalten werden.

Ein Schienenprofil 45, 46 läuft an den Seitenkanten in einem flachen Winkel zur Auflagefläche aus und lässt sich mit Hilfe eines gewöhnlichen und an jedem Filmset vorhandenen Klebebandes auf dem Untergrund fixieren. Ein solches Profil 45, 46 lässt sich kostengünstig in einem Stück und aus einem Material fertigen, z.B. ist eine Ausführung aus einem gefalzten Blech denkbar.

Fig. 17 zeigt eine Schienenkurve 46 mit den flach bauenden Merkmalen eines geraden Profils 45 aus Fig. 16, bei dem die im Profil geführten beiden Laufräder 2c so eingestellt sind, dass sie entlang der u-förmigen Führungsnut 49 ausgerichtet sind. Die frei auf dem Untergrund aufliegende Laufrolle 2d weist eine Ausrichtung parallel zum Schienenprofil 46 auf.

In Fig. 18 wird eine Anordnung eines Schwenkkopfsystems gezeigt, bei dem zwei zueinander ausgerichtete Laufrollen 2a in einem höher bauenden Schienenprofil 47 geführt werden, welches im führenden Bereich ebenfalls eine U-förmige Führungsnut 49 aufweist. Die auf dem Untergrund aufliegende, nicht geführte Laufrolle 2b, ist parallel zum Schienenprofil 47 ausgerichtet und in einem verlängert bauenden Lagerungsrohr 8 derart gelagert, dass die verlängerte Bauweise den Höhenunterschied des Schienenprofils 47 ausgleicht. Durch Verdrehung des Lagerungsrohres 8, welches mit einem Außengewinde in ein Innengewinde im Halterungsrahmen 5 eingreift, lässt sich eine Feinjustage erreichen, um das Halterungselement 5 ins Wasser zu bringen. Selbstverständlich ist ein derartigen höher bauendes Schienenprofil 47 auch als Kurvenausführung vorstellbar. Ebenso sollten sich Schienenprofile 47 vorteilhaft aneinander anfügen lassen, sodass Schienenführungen beliebiger Länge verwendbar sind.

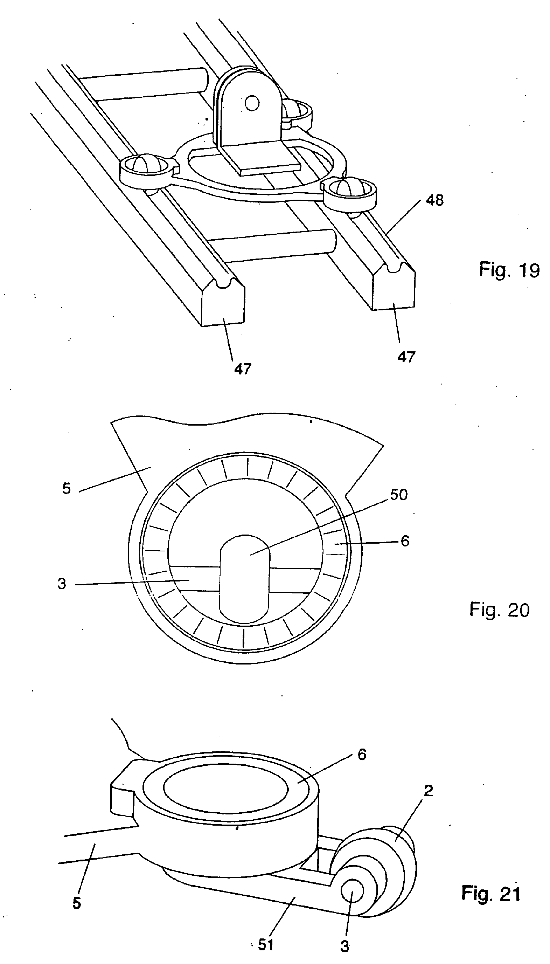

Fig. 19 zeigt zwei zu einer Doppelschiene 48 fest miteinander verbundene, parallel zu einander verlaufende, höher bauende Schienenprofile 47. Diese weisen jeweils einen größeren Querschnitt auf, wobei das Schienenprofil 47 beispielsweise als stranggezogenes kastenartiges Profil ausgeführt sein kann und so eine geringe Durchbiegung, auch bei frei tragender Montage aufweist. Insofern erweitert es die Möglichkeiten eines solchen Systems nicht unerheblich, dass sich mit Hilfe geeigneter Stative oder Tragevorrichtungen, wie z.B. Beleuchtungsstative oder Bühnenpodeste, eine solche Konfiguration in jeder gewünschten Höhe aufstellen lässt. Hierbei ist es ebenfalls wünschenswert, mehrere Doppelschienen 48 miteinander verbinden zu können und so eine beliebige Fahrtlänge zu erreichen. Auch eine Kurvenausführung ist als derartige Doppelschiene vorstellbar.

Fig. 20 zeigt eine schematische Draufsicht auf eine Laufrollenachsenanordnung, welche sich von der in Fig. 6 gezeigten und bereits erläuterten Anordnung derart unterscheidet, dass hierbei eine kleinere Laufrolle 50 verwendet wird und die Laufrollenachse 3 nicht mehr im Zentrum des Lagerelements 6 montiert ist. Ist die Lagerung zwischen Lagerelement 6 und Halterungselement 5 zudem freilaufend ausgelegt, so wird sich eine derartige Laufrolle 50 beim Verfahren des Systems in Laufrichtung ausrichten, was für Lenkbewegungen vorteilhaft sein kann.

Fig. 21 zeigt eine alternative Ausführung der in Fig. 20 vorgestellten Anordnung. Hierbei ist eine Laufrolle 2 um eine Laufrollenachse 3 verdrehbar gelagert, die in einer Achsengabel 51 montiert ist, wobei diese Achsengabel 51 fest mit dem Lagerelement 6 verbunden ist, welches freilaufend horizontal verdrehbar im Halterungselement 5 gelagert ist. Auch eine solche Laufrolle 2 wird sich beim Verfahren des Systems in Laufrichtung ausrichten, sofern sie nicht mit dem Halterungselement 5 kollidiert. Vorteilhaft hierbei ist, dass nicht auf kleinere Laufrollen 2 zurückgegriffen werden muss, bei welchen z.B. kleine Unebenheiten auf einem Untergrund beim Überfahren spürbarer sein würden.

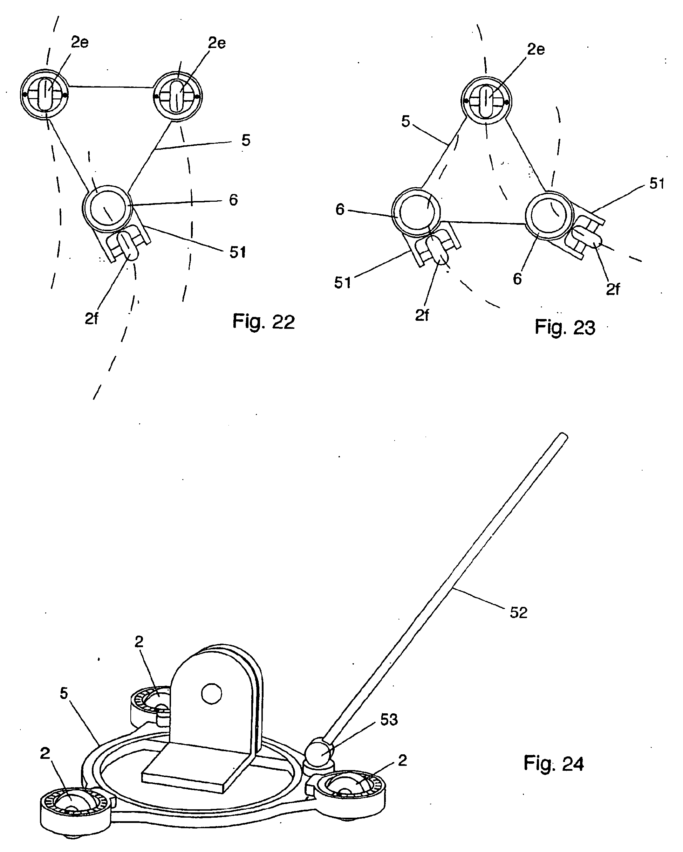

Fig. 22 zeigt eine schematische Darstellung eines Schwenkkopfsystems welches zwei parallel zueinander stehende, in ihrer horizontalen Verdrehung arretierte Laufrollen 2e aufweist und eine Laufrolle 2f, welche in einer Halterungsgabel 51, wie oben näher erläutert, gelagert ist, wobei diese Halterungsgabel 51 fest mit einem Lagerring 6 verbunden ist, der frei um eine vertikale Achse gegenüber dem Halterungselement 5 verdrehbar ist. Diese, außerhalb des Halterungselements 5 liegende Laufrolle 2f wird sich, so sie nicht mit dem Halterungselement 5 kollidiert, bei einer Verfahrbewegung in Fahrtrichtung ausrichten. Durch einen entsprechenden seitlichen Druck auf das Halterungselement 5 lässt sich das System nicht nur in einer vorbestimmten Richtung verfahren, sondern auch lenken.

Fig. 23 zeigt eine ähnliche Anordnung in der ebenfalls Lenkbewegungen möglich sind. Hierbei wird ein Schwenkkopfsystem gezeigt, welches eine, in ihrer horizontalen Verdrehung arretierte Laufrolle 2e aufweist und zwei Laufrollen 2f, welche in Halterungsgabeln 51 gelagert sind, wobei diese Halterungsgabeln 51 fest mit einem Lagerring 6 verbunden ist, der frei um eine vertikale Achse gegenüber dem Halterungselement 5 verdrehbar ist.

In Fig. 24 wird ein Schwenkkopfsystem mit einer anmontierten Führungsstange 52 gezeigt, welche über eine Führungslagerung 53 mit dem Halterungselement 5 verbunden ist. Eine solche Führungslagerung 53 ist so ausgelegt, dass die Führungsstange 52 gegenüber dem Halterungselement 5 um eine horizontale Achse im Führungslager 53 frei schwenkbar ist. Dabei lässt sich die Drehstellung der Führungsstange 52 um eine vertikale Achse im Führungslager 53 einstellen und arretieren. Über eine nicht gezeigte geeignete Vorrichtung ist es auch möglich, das Führungslager 53 so zu entriegeln, dass die Führungsstange 52 sowohl in horizontaler, wie in vertikaler Richtung frei schwenkbar ist.

Eine solche Führungsstange 52 ermöglicht einem Kameramann ein Schwenkkopfsystem in aufrechter Haltung zu führen, wenn dieses beispielsweise über den Boden fahren soll. Auch in unzugänglichen Motiven, wie z.B. einem Schacht oder einem Gang kann eine solche Führungsstange 52 hilfreich sein. Soll dabei eine Kamera einen vorher eingestellten, genau definierten Verfahrweg beschreiben oder wird ein Schwenkkopfsystem zusätzlich durch Schienen geführt, so ist es wünschenswert die Führungsstange 52 so einzustellen, dass diese in horizontaler, wie vertikaler Richtung frei schwenkbar ist, damit ein präziser, vorgegebener Verfahrweg durch die in ihrer horizontalen Verdrehung voreingestellten Laufrollen 2 gewährleistet ist.

Soll ein System über die in Fig. 22 und Fig. 23 näher erläuterten Laufrollenanordnungen auch gelenkt werden, so ist es von Vorteil, wenn die Schwenkbarkeit der Führungsstange 52 um eine vertikale Achse in der Führungslagerung 53 arretiert wird, da so die Lenkbewegungen der Führungsstange 52 auf das Halterungselement 5 übertragen werden. Eine freie Schwenkbarkeit um eine horizontale Achse in der Führungslagerung 53 ist deswegen von Vorteil, weil hierdurch eine unbeabsichtigtes Abheben eines Laufrades 2 durch eine Hebelwirkung der Führungsstange 52 verhindert wird.

Für das Ausführen von Lenkbewegungen mit Hilfe einer Führungsstange 52 ist es auch vorteilhaft, wenn sich die Drehstellung der Führungsstange 52 um eine vertikale Achse im Führungslager 53 einstellen und arretieren lässt. Hierdurch kann ein Kameramann eine für ihn oder das Motiv optimale Position wählen.

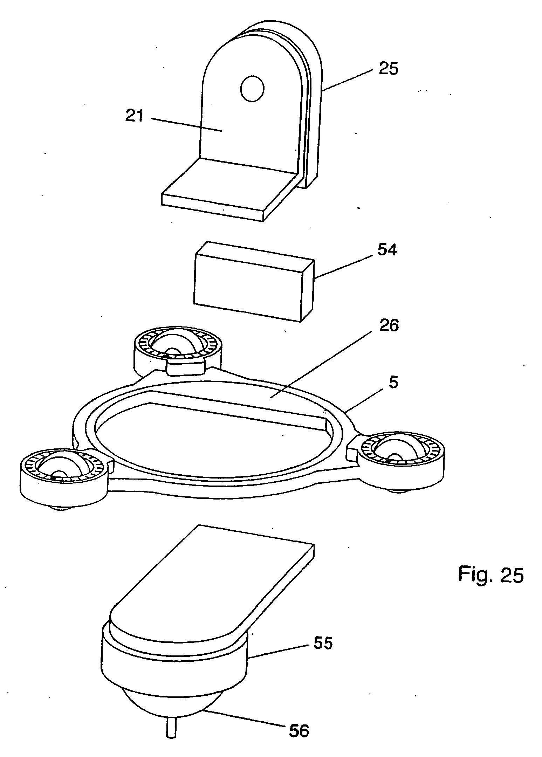

In Fig. 25 wird eine vorteilhafte Weiterbildung eines Schwenkkopfsystems mit einer L-förmigen Kamerahalterung 21 gezeigt, welche um eine horizontale Achse gegenüber einer Befestigungssäule 25 verdrehbar ist. Die Befestigungssäule 25 ist abnehmbar mit dem horizontalen Schwenkring 26 oder direkt mit dem Halterungselement 5 verbunden. Mit Hilfe eines Säulenblocks 54 lässt sich eine solche Befestigungssäule 25 beispielsweise verlängern, wodurch höhere Kamerapositionen erreicht werden.

Ebenso lassen sich die Einsatzmöglichkeiten eines solchen Schwenkkopfsystems dadurch erweitern, dass eine abgenommene Befestigungssäule 25 zusammen mit der L-förmigen Kamerahalterung 21 auf ein horizontales Schwenkmodul 55 montierbar ist, welches auf seiner Unterseite eine übliche Schnittstelle 56 aufweist, mit der Schwenkköpfe auf Halterungsvorrichtungen wie z.B. Stativen befestigt werden. Hierdurch wird es möglich, mit lediglich einem zusätzlichen horizontalen Schwenkmodul 55, einen handelsüblichen Schwenkkopf konfigurieren zu können und die Neigeeinheit, bestehend aus Befestigungssäule 25 und L-förmiger Halterung 21 dabei für beide Anwendungen zu nutzen. Somit ergeben deutlich niedrigere Anschaffungskosten, als für die Anschaffung eines Schwenkkopfsystems und eines herkömmlichen Schwenkkopfes aufzubringen wäre.

### Bezugszeichenliste:

- 1: Schwenkvorrichtung mit L-förmiger Halterung
- 1a: Schwenkvorrichtung mit Kamerawippe
- 1b: Schwenkvorrichtung als Kameraschwenkkopf
- 2: Laufrolle
- 3: Laufrollenachse
- 3a: gedachte Verlängerung der Laufrollenachsen
- 3b: Punkt im Raum
- 4: Laufrollenlager
- 5: Halterungselement
- 5a: Hauptachse des Schwenkkopfsystems
- 5b: Montageschenkel des Halterungselements
- 5c: Stützschenkel des Halterungselements
- 6: Lagerelement
- 7: Lagerungsrohr
- 8: verlängertes Lagerungsrohr
- 9: Bremse (zur Arretierung der Verdrehung des Laufrollenachsenlagers)
- 10: Lagerringelement
- 11: Skala
- 12: Referenzmarke (am Halterungselement)
- 13: Achsmarkierung
- 14: Stellrad
- 15: Digitalanzeige
- 16: aufsteckbare Peilvorrichtung
- 17: Stellmotor
- 18: Getriebe
- 19: CPU mit Motoransteuerung
- 20: Verbindungskabel
- 21: L-förmige Halterung
- 22: horizontaler Schenkel
- 23: senkrechter Schenkel
- 24: Halterungslager
- 24a: Schwenkarm
- 25: Befestigungssäule
- 26: Lagerring
- 27: Ringöffnung
- 28: Schwenkskala
- 28a: Referenzmarke der Schwenkskala
- 29: Libelle
- 30: auswechselbare Wippe
- 31: Führungskufe
- 32: konvexe Außenseite der Führungskufe
- 33: konkave Innenseite der Führungskufe
- 34: untere Führungsrolle
- 35: obere Führungsrolle
- 36: Schwenkmodul für horizontale Schwenkbewegungen
- 37: Schwenkmodul für vertikale Schwenkbewegungen
- 38: Montageplatte für Kamera
- 39: konkave Aufnahmeschale
- 40: konvexe Schwenkkopfunterseite
- 41: Nut
- 42: flacher bauende Wippe (mit kleinerem Neigebereich)
- 43: höher bauende Wippe (mit grösserem Neigebereich)
- 44: Neigearretierung
- 45: Schienenprofil (flachbauend)
- 46: Schienenkurve (flachbauend)
- 47: Schienenprofil (höherbauend)
- 48: Doppelschiene (höherbauend)
- 49: Führungsnut
- 50: kleinere Laufrolle
- 51: Achsengabel
- 52: Führungsstange
- 53: Führungslager
- 54: Säulenblock
- 55: horizontales Schwenkmodul
- 56: Befestigungsschnittstelle (hier Kugelschale)

## Patentansprüche

1. Schwenkkopfsystem mit einer Schwenkvorrichtung (1, 1 a, 1 b, 1c) zur Arretierung eines voreingestellten Kamerawinkels und/oder zur Durchführung vertikaler Neigebewegungen und/oder horizontaler Schwenkbewegungen einer Kamera, insbesondere einer Film- oder Videokamera, wobei die Schwenkvorrichtung (1, 1 a, 1 b, 1c) in oder auf einem im Wesentlichen flachen Halterungselement (5) angebracht ist, an dem mindestens drei um jeweils eine horizontale Laufrollenachse (3) drehende Laufrollen (2) im Winkelabstand um eine gedachte vertikale Achse (A) angebracht sind, **dadurch gekennzeichnet, dass** alle Laufrollenachsen (3) in einer horizontalen Ebene verdreh- und feststellbar sind, und dass alle Laufrollenachsen (3) mit einer Laufrichtungseinstellvorrichtung (11, 11a, 11b, 12,13, 14,15, 16,16i, 17) und einer Arretierungsvorrichtung (9) zur Einstellung und Arretierung beliebiger Drehstellungen in der horizontalen Ebene der Laufrollenachse versehen sind.

2. Schwenkkopfsystem nach Anspruch 1, **dadurch gekennzeichnet, dass** die Laufrichtungseinstellvorrichtung eine Skala (11) umfasst, welche die Drehstellung der mindestens einen Laufrollenachse (3) gegenüber dem Halterungselement (5) an einer Referenzmarke (12) anzeigt.

3. Schwenkkopfsystem nach Anspruch 2, **dadurch gekennzeichnet, dass** die Skala (11) wenigsten eine besondere Markierung (11 b) zur Anzeige einer Drehstellung aufweist, in der die Laufrollen um (30 +x*60)° zu einer Hauptachse (5a) des Schwenkvorrichtung (1, 1a) verschwenkt sind, wobei x eine ganze Zahl zwischen 1 und 5 sein kann.

4. Schwenkkopfsystem nach Anspruch 1, **dadurch gekennzeichnet, dass** die Laufrichtungseinstellvorrichtung eine Digitalanzeige (15) umfasst, welche die Drehstellung der wenigstens einen Laufrollenachse (3) in der horizontalen Ebene gegenüber dem flachen Halterungselement (5) anzeigt.

5. Schwenkkopfsystem nach Anspruch 1, **dadurch gekennzeichnet, dass** ein Inkrementalgeber zur Ermittlung der Drehstellung einer Laufrollenachse (3) in einer horizontalen Ebene gegenüber dem flachen Halterungselement (5) vorgesehen ist.

6. Schwenkkopfsystem nach Anspruch 1, **dadurch gekennzeichnet, dass** die Laufrichtungseinstellvorrichtung Markierungen (13) oder Peilelemente (16, 16i) für eine Ausrichtung der Laufrollenachse (3) in Richtung eines gedachten Punktes umfasst.

7. Schwenkkopfsystem nach Anspruch 1, **dadurch gekennzeichnet, dass** die Laufrichtungseinstellvorrichtung wenigstens einen Motor (17) umfasst, durch den die Drehstellung der mindestens einen Laufrollenachse (3) einstellbar ist.

8. Schwenkkopfsystem nach Anspruch 7, **dadurch gekennzeichnet, dass** der wenigstens eine Motor (17) durch eine CPU (19) angesteuert wird.

9. Schwenkkopfsystem nach Anspruch 1, **dadurch gekennzeichnet, dass** die Laufrollen (2) in ihrer Umlaufrichtung arretierbar sind.

10. Schwenkkopfsystem nach Anspruch 1, **dadurch gekennzeichnet, dass** eine Einstelleinrichtung zur Einstellung der Reibung zwischen mindestens einer Laufrolle (2) und ihrer Laufrollenachse (3) vorgesehen ist.

11. Schwenkkopfsystem nach Anspruch 10, **dadurch gekennzeichnet, dass** eine Dämpfungseinrichtung zur Dämpfung der Reibung zwischen mindestens einer Laufrolle (2) und ihrer Laufrollenachse (3) vorgesehen ist.

12. Schwenkkopfsystem nach Anspruch 11, **dadurch gekennzeichnet, dass** der Dämpfungsgrad einstellbar ist.

13. Schwenkkopfsystem nach Anspruch 1, **dadurch gekennzeichnet, dass** drei Laufrollen (2) vorgesehen sind, welche in einem Winkelabstand von jeweils 120° um die vertikale Achse (A) angeordnet sind.

14. Schwenkkopfsystem nach Anspruch 1, **dadurch gekennzeichnet, dass** wenigstens ein Lagerelement (6) in dem eine Laufrollenachse (3) angebracht ist, lösbar mit dem Halterungselement (5) verbunden ist.

15. Schwenkkopfsystem nach Anspruch 1, **dadurch gekennzeichnet, dass** die Laufrollenachse (3) in einem an der Außenseite des Halterungselements (5) vorgesehenen Lagerringelement (10) so gelagert ist, dass sie in der horizontalen Ebene verdrehbar ist.

16. Schwenkkopfsystem nach Anspruch 1, **dadurch gekennzeichnet, dass** die Drehbewegung wenigstens einer Laufrolle (2) um die Laufrollenachse (3) mittels eines Motors antreibbar ist.

17. Schwenkkopfsystem nach Anspruch 16, **dadurch gekennzeichnet, dass** die Geschwindigkeit der Drehbewegung mindestens einer Laufrolle (2) um die Laufrollenachse (3) von einer zentralen CPU (19) gesteuert wird.

18. Schwenkkopfsystem nach Anspruch 1, **dadurch gekennzeichnet, dass** die horizontalen Schwenkbewegungen und/oder die vertikalen Neigebewegungen einer Kamera in der Schwenkvorrichtung (1,1a,1b) mittels Motoren erfolgen, welche von einer zentralen CPU (19) ansteuerbar sind.

19. Schwenkkopfsystem nach Anspruch 1, **dadurch gekennzeichnet, dass** die Schwenkvorrichtung (1 c) vom Halterungselement (5) abnehmbar ist.

20. Schwenkkopfsystem nach Anspruch 1, **dadurch gekennzeichnet, dass** die Schwenkvorrichtung (1 a) eine L-förmige Halterung (21) zur Montage einer Kamera umfasst, die um eine horizontale Achse verschwenkbar an einer Befestigungssäule (25) angebracht ist.

21. Schwenkkopfsystem nach Anspruch 20, **dadurch gekennzeichnet, dass** die Befestigungssäule (25) auf einem in dem Halterungselement (5) um eine vertikale Achse drehbar gelagerten Lagerring (26) angebracht ist, der eine Ringöffnung (27) aufweist, die so ausgebildet ist, dass ein Durchschwenken oder ein teilweises Durchschwenken einer montierten Kamera und der L-förmigen Halterung (21) möglich ist.

22. Schwenkkopfsystem nach Anspruch 20, **dadurch gekennzeichnet, dass** die Befestigungssäule (25) zusammen mit der L-förmigen Halterung (21) abnehmbar ist.

23. Schwenkkopfsystem nach Anspruch 1, **dadurch gekennzeichnet, dass** eine auswechselbare Wippe (30) auf dem Halterungselement (5) angebracht ist, die auf ihrer Unterseite wenigstens eine bogenförmig gekrümmte Führungskufe (31) aufweist, die mit ihrer konvexen Außenseite (32) auf wenigstens zwei im Abstand zueinander angeordneten unteren Führungsrollen (34) aufliegt, und mit ihrer konkaven Innenseite wenigstens eine obere Führungsrolle (35) berührt.

24. Schwenkkopfsystem nach Anspruch 1, **dadurch gekennzeichnet, dass** die wenigstens eine Laufrollenachse (3) so gelagert ist, dass ihre Verdrehung in der horizontalen Ebene um eine vertikale Achse erfolgt, die außerhalb des Zentrums der Laufrolle (2) liegt.

25. Schwenkkopfsystem nach Anspruch 1, **dadurch gekennzeichnet, dass** eine Führungsstange (52) mit einem Ende an dem Halterungselement (5) so angebracht ist, dass sie um eine horizontale Achse verschwenkbar ist.

26. Schwenkkopfsystem nach Anspruch 25, **dadurch gekennzeichnet, dass** die Führungsstange (52) an dem einen Ende um eine vertikale Achse drehbar an dem Halterungselement (5) angebracht ist, wobei die Drehstellung einstell- und arretierbar ist.

## Claims

1. A pivoting head system having a pivoting device (1, 1a, 1b, 1c) for locking a preset camera angle and/or for carrying out vertical tilting movements and/or horizontal pivoting movements of a camera, in particular a film or video camera, wherein the pivoting device (1, 1a, 1b, 1c) is mounted in or on a substantially flat holding element (5) on which there are mounted, at an angular spacing about an imaginary vertical axis (A), at least three casters (2), each rotating about a horizontal caster axle (3), **characterized in that** all caster axles (3) can be rotated and fixed in a horizontal plane and **in that** all caster axles (3) are provided with a running direction adjusting device (11, 11a, 11b, 12, 13, 14, 15, 16, 16i, 17) and a locking device (9) for adjusting and locking arbitrary rotary positions in the horizontal plane of the caster axle.

2. The pivoting head system according to claim 1, **characterized in that** the running direction adjusting device comprises a scale (11) which indicates the rotary position of the at least one caster axle (3) with respect to the holding element (5) at a reference mark (12).

3. The pivoting head system according to claim 2, **characterized in that** the scale (11) has at least one special marking (11 b) for indicating a rotary position in which the casters are pivoted by (30+x*60)° relative to a main axis (5a) of the pivoting device (1, 1a), wherein x can be an integer between 1 and 5.

4. The pivoting head system according to claim 1, **characterized in that** the running direction adjusting device comprises a digital display (15) which indicates the rotary position of the at least one caster axle (3) in the horizontal plane with respect to the flat holding element (5).

5. The pivoting head system according to claim 1, **characterized in that** an incremental encoder is provided for determining the rotary position of a caster axle (3) in a horizontal plane with respect to the flat holding element (5).

6. The pivoting head system according to claim 1, **characterized in that** the running direction adjusting device comprises markings (13) or direction-finding elements (16, 16i) for aligning the caster axle (3) in the direction of an imaginary point.

7. The pivoting head system according to claim 1, **characterized in that** the running direction adjusting device comprises at least one motor (17) by means of which it is possible to adjust the rotary position of the at least one caster axle (3).

8. The pivoting head system according to claim 7, **characterized in that** the at least one motor (17) is controlled by a CPU (19).

9. The pivoting head system according to claim 1, **characterized in that** the rotating direction of the casters (2) can be locked.

10. The pivoting head system according to claim 1, **characterized in that** an adjusting device is provided for adjusting the friction between at least one caster (2) and its caster axle (3).

11. The pivoting head system according to claim 10, **characterized in that** a damping device is provided for damping the friction between at least one caster (2) and its caster axle (3).

12. The pivoting head system according to claim 11, **characterized in that** the damping level can be adjusted.

13. The pivoting head system according to claim 1, **characterized in that** three casters (2) are provided which are arranged at a respective angular spacing of 120° about the vertical axis (A).

14. The pivoting head system according to claim 1, **characterized in that** at least one bearing element (6) in which one caster axle (3) is mounted is detachably connected to the holding element (5).

15. The pivoting head system according to claim 1, **characterized in that** the caster axle (3) is supported in a bearing ring element (10) provided on the outside of the holding element (5) such that it can be rotated in the horizontal plane.

16. The pivoting head system according to claim 1, **characterized in that** the rotary movement of at least one caster (2) about the caster axle (3) can be driven by means of a motor.

17. The pivoting head system according to claim 16, **characterized in that** the speed of the rotary movement of at least one caster (2) about the caster axle (3) is controlled by a central CPU (19).

18. The pivoting head system according to claim 1, **characterized in that** the horizontal pivoting movements and/or the vertical tilting movements of a camera in the pivoting device (1, 1a, 1 b) are performed by means of motors which can be controlled by a central CPU (19).

19. The pivoting head system according to claim 1, **characterized in that** the pivoting device (1 c) can be removed from the holding element (5).

20. The pivoting head system according to claim 1, **characterized in that** the pivoting device (1 a) comprises an L-shaped holder (21) for mounting a camera which is mounted such that it can pivot about a horizontal axis on a fastening column (25).

21. The pivoting head system according to claim 20, **characterized in that** the fastening column (25) is mounted on a bearing ring (26) which is supported in the holding element (5) such that it can rotate about a vertical axis and which has an annular opening (27) which is designed such that a mounted camera and the L-shaped holder (21) can pivot, or partially pivot, through.

22. The pivoting head system according to claim 20, **characterized in that** the fastening column (25) can be removed together with the L-shaped holder (21).

23. The pivoting head system according to claim 1, **characterized in that** an exchangeable rocker (30) is mounted on the holding element (5), which exchangeable rocker (30) has, at its bottom side, at least one arcuately curved guide skid (31) resting with its convex outer surface (32) on at least two lower guide rollers (34) arranged at a spacing from one another, and touches at least one upper guide roller (35) with its concave inner surface.

24. The pivoting head system according to claim 1, **characterized in that** the at least one caster axle (3) is supported such that it rotates in the horizontal plane about a vertical axis which lies outside the centre of the caster (2).

25. The pivoting head system according to claim 1, **characterized in that** a guide rod (52) is mounted with one end on the holding element (5) such that it can be pivoted about a horizontal axis.

26. The pivoting head system according to claim 25, **characterized in that** the guide rod (52) is mounted at one end on the holding element (5) such that it can rotate about a vertical axis, wherein the rotary position can be adjusted and locked.

## Revendications

1. Système à tête pivotante comprenant un dispositif de pivotement (1, 1a, 1b, 1c) permettant de bloquer un angle de caméra préréglé et/ou d'exécuter des mouvements d'inclinaison verticaux et/ou des mouvements de pivotement horizontaux d'une caméra, notamment d'un appareil photographique ou d'une caméra vidéo, le dispositif de pivotement (1, 1a, 1b, 1c) étant placé dans ou sur un élément de support sensiblement plat (5) sur lequel sont montés, à distance angulaire autour d'un axe vertical imaginaire (A), au moins trois galets de roulement (2) tournant chacun autour d'un axe de galet de roulement horizontal (3), **caractérisé en ce que** tous les axes de galet de roulement (3) peuvent être réglés en rotation et en position fixe dans un plan horizontal et **en ce que** tous les axes de galet de roulement (3) sont pourvus d'un dispositif de réglage de la direction de roulement (11, 11a, 11b, 12,13, 14,15, 16,16i, 17) et d'un dispositif de blocage (9) pour le réglage et le blocage de positions de rotation quelconques dans le plan horizontal de l'axe de galet de roulement.

2. Système à tête pivotante selon la revendication 1, **caractérisé en ce que** le dispositif de réglage de la direction de roulement comprend une échelle graduée (11) qui indique la position de rotation de l'au moins un axe de galet de roulement (3) par rapport à l'élément de support (5) au niveau d'un trait de repère (12).

3. Système à tête pivotante selon la revendication 2, **caractérisé en ce que** l'échelle graduée (11) comporte au moins une marque particulière (11 b) pour indiquer une position de rotation dans laquelle les galets de roulement sont pivotés de (30 +x*60)° par rapport à un axe principal (5a) du dispositif de pivotement (1, 1a), x pouvant être un nombre entier compris entre 1 et 5.

4. Système à tête pivotante selon la revendication 1, **caractérisé en ce que** le dispositif de réglage de la direction de roulement comprend un affichage numérique (15) qui indique la position de rotation de l'au moins un axe de galet de roulement (3) dans le plan horizontal par rapport à l'élément de support plat (5).

5. Système à tête pivotante selon la revendication 1, **caractérisé en ce que** l'on prévoit un capteur incrémental permettant de déterminer la position de rotation d'un axe de galet de roulement (3) dans un plan horizontal par rapport à l'élément de support plat (5).

6. Système à tête pivotante selon la revendication 1, **caractérisé en ce que** le dispositif de réglage de la direction de roulement comprend des marques (13) ou éléments de repérage (16, 16i) pour une orientation de l'axe de galet de roulement (3) dans la direction d'un point imaginaire.

7. Système à tête pivotante selon la revendication 1, **caractérisé en ce que** le dispositif de réglage de la direction de roulement comprend au moins un moteur (17) grâce auquel la position de rotation de l'au moins un axe de galet de roulement (3) peut être réglée.

8. Système à tête pivotante selon la revendication 7, **caractérisé en ce que** l'au moins un moteur (17) est commandé par une CPU (19).

9. Système à tête pivotante selon la revendication 1, **caractérisé en ce que** les galets de roulement (2) peuvent être bloqués dans leur direction de rotation.

10. Système à tête pivotante selon la revendication 1, **caractérisé en ce que** l'on prévoit un dispositif de réglage pour le réglage du frottement entre l'au moins un galet de roulement (2) et son axe de galet de roulement (3).

11. Système à tête pivotante selon la revendication 10, **caractérisé en ce que** l'on prévoit un dispositif d'atténuation pour l'atténuation du frottement entre au moins un galet de roulement (2) et son axe de galet de roulement (3).

12. Système à tête pivotante selon la revendication 11, **caractérisé en ce que** le degré d'atténuation est réglable.

13. Système à tête pivotante selon la revendication 1, **caractérisé en ce que** l'on prévoit trois galets de roulement (2) qui sont disposés à une distance angulaire respective de 120° autour de l'axe vertical (A).

14. Système à tête pivotante selon la revendication 1, **caractérisé en ce qu'**au moins un élément de palier (6) dans lequel un axe de galet de roulement (3) est logé est relié de manière détachable à l'élément de support (5).

15. Système à tête pivotante selon la revendication 1, **caractérisé en ce que** l'axe de galet de roulement (3) est monté dans un élément annulaire de support (10) prévu sur le côté extérieur de l'élément de support (5) d'une manière lui permettant d'effectuer une rotation dans le plan horizontal.

16. Système à tête pivotante selon la revendication 1, **caractérisé en ce que** le mouvement de rotation d'au moins un galet de roulement (2) autour de l'axe de galet de roulement (3) peut être entraîné par un moteur.

17. Système à tête pivotante selon la revendication 16, **caractérisé en ce que** la vitesse du mouvement de rotation d'au moins un galet de roulement (2) autour de l'axe de galet de roulement (3) est commandée par une CPU centrale (19).

18. Système à tête pivotante selon la revendication 1, **caractérisé en ce que** les mouvements de pivotement horizontaux et/ou les mouvements d'inclinaison verticaux d'une caméra dans le dispositif de pivotement (1, 1 a, 1 b) s'effectuent grâce à des moteurs qui peuvent être commandés par une CPU centrale (19).

19. Système à tête pivotante selon la revendication 1, **caractérisé en ce que** le dispositif de pivotement (1c) peut être retiré de l'élément de support (5).

20. Système à tête pivotante selon la revendication 1, **caractérisé en ce que** le dispositif de pivotement (1a) comprend un support en forme de L (21) pour le montage d'une caméra qui est installé sur une colonne de fixation (25) de manière pivotante autour d'un axe horizontal.

21. Système à tête pivotante selon la revendication 20, **caractérisé en ce que** la colonne de fixation (25) est fixée sur un anneau de support (26) monté de manière rotative autour d'un axe vertical dans l'élément de support (5), lequel anneau de support (26) est pourvu d'une ouverture annulaire (27) qui est exécutée de manière à permettre un pivotement complet ou un pivotement partiel d'une caméra installée et du support en forme de L (21) à travers elle.

22. Système à tête pivotante selon la revendication 20, **caractérisé en ce que** la colonne de fixation (25) peut être retirée avec le support en forme de L (21).

23. Système à tête pivotante selon la revendication 1, **caractérisé en ce qu'**une bascule remplaçable (30) est fixée sur l'élément de support (5), laquelle bascule est pourvue, sur son côté inférieur, d'au moins un patin de guidage (31) courbé en forme d'arc qui repose, avec sa face extérieure convexe (32), sur au moins deux galets de guidage inférieurs (34) situés à une distance l'un de l'autre et est contacte, avec sa face intérieure concave, au moins un galet de guidage supérieur (35).

24. Système à tête pivotante selon la revendication 1, **caractérisé en ce que** l'au moins un axe de galet de roulement (3) est monté de manière à ce que sa rotation dans le plan horizontal s'effectue autour d'un axe vertical situé à l'extérieur du centre du galet de roulement (2).

25. Système à tête pivotante selon la revendication 1, **caractérisé en ce qu'**une tige de guidage (52) est montée, à une extrémité, sur l'élément de support (5) de manière à pouvoir pivoter autour d'un axe horizontal.

26. Système à tête pivotante selon la revendication 25, **caractérisé en ce que** la tige de guidage (52) est montée sur l'élément de support (5), à cette extrémité, d'une manière permettant une rotation autour d'un axe vertical, la position de rotation pouvant être réglée et bloquée.
